# EUROPÄISCHE PATENTSCHRIFT

(11) **EP 4 232 731 B1**
(45) Veröffentlichungstag und Bekanntmachung des Hinweises auf die Patenterteilung: **28.05.2025**
(21) Anmeldenummer: 21801052.8
(22) Anmeldetag: 22.10.2021
(51) Int. Cl.: F16L 11/118, B29C 53/78, F16L 11/16, A47L 9/24, B29C 65/00

(54) **FLEXIBLER SCHLAUCH, INSBESONDERE STAUBSAUGERSCHLAUCH, VERFAHREN ZU DESSEN HERSTELLUNG UND HIERFÜR EINSETZBARE VORRICHTUNG**
FLEXIBLE HOSE, MORE PARTICULARLY VACUUM CLEANER HOSE, METHOD FOR PRODUCTION OF SAME AND DEVICE WHICH CAN BE USED HEREFOR
TUYAU FLEXIBLE, PLUS PRÉCISÉMENT TUYAU D'ASPIRATEUR, SON PROCÉDÉ DE PRODUCTION ET DISPOSITIF POUVANT ÊTRE UTILISÉ À CET EFFET

(30) Priorität: 22.10.2020 DE 102020006493
(43) Veröffentlichungstag der Anmeldung: 30.08.2023
(73) Patentinhaber: TRUPLAST Kunststofftechnik GmbH, 35428 Langgöns (DE)
(72) Erfinder: HOLST, Marco, 64625 Bensheim (DE); SCHWAN, Dirk, 35428 Langgöns (DE); STEITZ, Ingo, 35460 Staufenberg (DE)
(74) Vertreter: Oppermann, Mark
(86) Internationale Anmeldenummer: PCT/EP2021/079433
(87) Internationale Veröffentlichungsnummer: WO 2022/084549

(56) Entgegenhaltungen:
- EP-A1- 2 378 174
- WO-A1-2020/209352
- WO-A1-97/16304
- DE-U1- 202017 107 890

## Beschreibung

### TECHNISCHES GEBIET

Die vorliegende Erfindung bezieht sich auf einen flexiblen Schlauch gemäß dem Oberbegriff des Patentanspruchs 1 sowie auf ein Verfahren zur Herstellung eines solchen Schlauchs in großen Stückzahlen und eine zu diesem Zweck einsetzbare Vorrichtung. Insbesondere bezieht sich die Erfindung auf einen flexiblen Staubsaugerschlauch und dessen Herstellung, wie er in einem industriellen Umfeld, im Handwerk sowie in privaten Haushalten massenhaft zum Einsatz kommt.

### HINTERGRUND DER ERFINDUNG UND STAND DER TECHNIK

Beim Ansaugen oder Fördern sehr feiner Partikel durch einen aus einem Kunststoffmaterial, wie etwa Polyethylen (PE), Polypropylen (PP) oder einem Ethylen-Vinylacetat-Copolymer (EVAC) bestehenden Schlauch beispielsweise mittels eines Staubsaugers werden durch die Reibung der Partikel an den Wänden des Schlauchs starke elektrostatische Aufladungen erzeugt. Diese können sich z.B. bei einem Kontakt des elektrisch geladenen Saugschlauchs mit einem geerdeten Bauteil oder Bediener schlagartig, ggf. sogar unter Funkenbildung entladen. Die Entladungen können so stark ausfallen, dass an elektronischen Geräten Schäden auftreten und/oder beim Bediener starke Schmerzen ausgelöst werden, schlimmstenfalls Lebensgefahr besteht, wenn z.B. ein Herzschrittmacher zum Stillstand gebracht wird.

Darüber hinaus können Funkenentladungen explosionsfähige Staub/ Luft-, Gas/Luft- oder Lösemitteldampf/Luftgemische zünden. Eine elektrostatische Zündgefahr kann sich dabei sowohl vom aufgeladenen Fördergut als auch von aufgeladenen Bauteilen des Staubsaugers, insbesondere des Saugschlauchs ergeben.

Solche schlagartigen Entladungen lassen sich verhindern, wenn alle die Partikel leitenden Teile des Staubsaugers zum Potentialausgleich elektrisch untereinander und mit einem Schutzleiter des zugeordneten Elektroanschlusses verbunden sind.

Vor diesem Hintergrund werden zum Saugen feiner Stäube vermehrt Saugschläuche eingesetzt, die aus einem hochohmig elektrisch leitenden Material bestehen, zum Beispiel aus PE, in das feine Rußpartikel eingebettet sind. Dieses Material ist allerdings gegenüber reinem PE teuer und hinterlässt darüber hinaus unerwünschte Abriebspuren, wenn der Saugschlauch mit seiner Außenumfangsfläche über einen Untergrund gezogen wird. Mittels einer zusätzlichen Schutzschicht, die am Außenumfang des Schlauchs aufgebracht wird, können diese Abriebspuren verhindert werden, was jedoch mit einem Mehraufwand verbunden ist und zu einer weiteren Verteuerung der Saugschläuche führt.

Um hier Abhilfe zu schaffen, ist in der Druckschrift DE 20 2009 016 596 U1 vorgeschlagen worden, einen gewendelten Saugschlauch aus einem kostengünstigen Grundmaterial einzusetzen, an dem wenigstens ein elektrischer Leiter zur Ableitung von elektrostatischer Ladung vorgesehen ist, der sich im Wesentlichen über die Wendellänge des Saugschlauchs erstreckt, wobei der elektrische Leiter eine Breite hat, die höchstens gleich der Gangbreite des Saugschlauchs ist. Dieser elektrische Leiter kann z.B. als Kunststoffschicht mit einem eingebetteten Rußanteil, als wendelförmig verlaufender elektrisch leitender Draht oder als elektrisch leitendes Band ausgebildet sein. Zur Lage des elektrischen Leiters ist diesem Stand der Technik zu entnehmen, dass der elektrische Leiter entweder in das Material des Saugschlauchs eingebettet oder an der Innenseite des Bodens des Wendelgangs, an der Außenseite des Bodens des Wendelgangs oder innen bzw. außen an den den Wendelgang begrenzenden Stegen angeordnet ist.

Die Druckschrift DE 296 02 061 U1 offenbart einen weiteren elektrisch ableitfähigen Schlauch, mit an seiner Außenseite wendelförmig verlaufenden Wellenbergen und diesen benachbarten Wellentälern. In den Wellentälern ist ein nach außen abgedeckter elektrischer Leiter eingelegt, der aus einer unisolierten, zur Ableitung elektrostatischer Aufladungen geeigneten Litze besteht. Der elektrische Leiter ist von einem aus thermoplastischen Material bestehenden Band abgedeckt, dessen Längsränder an den Flanken der Wellenberge durch Anschweißen oder Ankleben befestigt sind.

Um gegenüber den vorbeschriebenen Schläuchen, die eine "einfache elektrisch leitende Vorrichtung" aufweisen, insbesondere eine verbesserte Abführung der elektrischen Ladungen zu ermöglichen, ist ferner in der Druckschrift WO 2005/047748 A1 ein Förderschlauch vorgeschlagen worden, bei dem zur Ableitung der elektrischen Ladungen eine Kombination aus "zwei elektrisch leitenden Vorrichtungen" vorgesehen ist. Die eine elektrisch leitende Vorrichtung ist ein den Innenraum des Schlauchs konzentrisch umgebender und durch die Innenfläche begrenzter Bereich der Schlauchwand, der durch Einbettung von elektrisch leitenden Partikeln in das Basismaterial mit einer gegenüber dem Basismaterial deutlich erhöhten elektrischen Leitfähigkeit ausgestattet ist. Die andere elektrisch leitende Vorrichtung ist ein in axialer Richtung verlaufendes, lokales elektrisches Leitungselement, das mit dem Bereich erhöhter elektrischer Leitfähigkeit direkt in Verbindung steht und die durch diesen Bereich gesammelten Ladungen zur Erde abführen soll.

Bei den Druckschläuchen gemäß diesem Stand der Technik werden die beiden elektrisch leitenden Vorrichtungen beim Extrudieren bzw. Koextrudieren des jeweiligen Druckschlauchs direkt in die Schlauchwand eingebettet, so dass in einem Arbeitsgang ein einteiliger, gebrauchsfertiger Druckschlauch entsteht.

Eine demgegenüber insbesondere im Hinblick auf ein gutes Formerhaltungsvermögen unter einem innen anliegenden Vakuum bevorzugte und weit verbreitete Technik zum Herstellen von flexiblen Saugschläuchen besteht darin, zunächst ein Profil aus einem Kunststoffmaterial zu extrudieren, welches sodann helixförmig bzw. spiralförmig gewickelt wird, wobei benachbarte Wicklungen bzw. Windungen des Profils miteinander verschweißt oder verklebt werden. In diesem Zusammenhang offenbart z.B. die Druckschrift WO 2012/160524 A1 einen flexiblen Kunststoffschlauch, der durch Wickeln eines extrudierten Profils hergestellt wird, wobei beim Extrudieren des Profils auch elektrische Leiter mit in dem Profil eingebettet werden können.

Des Weiteren ist aus der den Oberbegriff des Patentanspruchs 1 bildenden Druckschrift DE 20 2017 107 890 U1 ein flexibler Schlauch bekannt, der eine Außenwand hat, die aus einer Mehrzahl von Windungen eines extrudierten und helixförmig gewickelten Profils hergestellt ist. Benachbarte Windungen des Profils sind mittels einer Naht miteinander verbunden, wobei die Außenwand eine elektrisch leitfähige Bahn aufweist, die einen leitfähigen Abschnitt des extrudierten und helixförmig gewickelten Profils und/oder der Naht enthält. Hierbei besteht der leitfähige Abschnitt aus einem elektrisch leitfähigen Kunststoffmaterial. Die elektrisch leitfähige Bahn enthält weiterhin einen elektrisch leitfähigen Faden, der an der Außenwand des Schlauchs in elektrischem Kontakt mit dem leitfähigen Abschnitt des extrudierten und helixförmig gewickelten Profils und/oder der Naht steht, und zwar eingebettet in der Naht oder einer im Profil vorgesehenen Nut. Dieser elektrisch leitfähige Faden ist somit ebenfalls helixförmig gewickelt integraler Bestandteil des fertigen Saugschlauchs.

Ein Nachteil der vorbekannten elektrisch ableitfähigen, flexiblen Schläuche mit "doppelter Ableitung" wird darin gesehen, dass für eine gute elektrische Ableitfähigkeit des Schlauchs eine im Verhältnis große Menge an elektrisch leitfähigen Materialien im Schlauch vorzusehen ist, die aufgrund ihrer Integration im Schlauch auch nur schwer wiederzugewinnen sind, wenn überhaupt.

Darüber hinaus zeigt die Druckschrift WO 2020/209352 A1 einen flexiblen Schlauch mit einem Grundkörper, auf dessen äußerer Umfangsfläche eine im Wesentlichen streifenförmige, leitende Schicht aufgebracht ist, die sich in axialer Richtung entlang des Grundkörpers erstreckt. Der mit der leitenden Schicht versehene Grundkörper ist mittels eines um die äußere Umfangsfläche des Grundkörpers spiralförmig gewundenen, leitenden Drahts umwickelt, welcher die leitende Schicht kontaktiert. Zum Schutz ist der leitende Draht mittels eines Verstärkungsteils abgedeckt, das die äußere Umfangsfläche des Grundkörpers der spiralförmigen Umwicklung des Drahts folgend so umläuft, dass die Oberfläche des leitenden Drahts an die äußere Oberfläche der leitenden Schicht "gekrimpt" ist.

In der Druckschrift WO 97/16304 A1 wird weiterhin ein Verfahren zur kontinuierlichen Herstellung von Wabenstrukturmaterialien des "nichtexpandierenden Typs" aus z.B. einem wärmehärtenden, harzimprägnierten Faservlies offenbart. Insbesondere bezieht sich diese Druckschrift auf ein Verfahren, bei dem eine sequenzielle und selektive Verklebung von Knoten zu Knoten in aufeinanderfolgend aufgebrachten, halbzelligen Wabenschichten erfolgt. Die Verklebung wird vorzugsweise unter Einsatz eines traktorartigen Bands in Form eines Zahnriemens erzielt, der ein zuvor nicht vorgewelltes Bahnmaterial aufbereitet bzw. verformt und anschließend verfestigt. Während der Zahnriemen im Betrieb die Wabenoberfläche quert, wellt er nicht vorgewelltes Bahnmaterial zwischen einem vorderen, berührenden Zahn des Riemens und einem Gegenknoten einer zuvor verlegten Bahn, die an ihren diagonal gegenüberliegenden Flankenseiten von einer obersten Reihe von Formstäben umgeben und eingeschlossen ist. Wenn der Zahnriemen dann die Waben weiter durchläuft, wird der zunächst "wellende Zahn" zu einem stationären Verfestigungszahn. In diesem Abschnitt werden die geeignet beheizten Zähne des Zahnriemens mit Hilfe eines Druckbeaufschlagungsmittels gegen die Formstäbe gedrückt, um das Bahnmaterial zu verfestigen. Die jeweils unteren Formstäbe werden dann herausgezogen, um einen Betrag angehoben und von oben auf der zuletzt gelegten Schicht eingesetzt, um das Verfahren zu wiederholen. Somit können übereinanderliegende Wabenstrukturen von gewünschter Höhe erzeugt werden.

Die Druckschrift EP 2 378 174 A1 zeigt schließlich einen flexiblen Schlauch mit einer Schlaucheinheit, an deren Innenwand eine flexible Röhre mittels eines wärmeerzeugenden Klebeelements angeklebt ist. Für die Herstellung des Schlauchs wird zunächst die Schlaucheinheit in herkömmlicherweise produziert, d.h. blasgeformt oder gewickelt und abgelängt. Die Röhre wird extrudiert und mit dem wärmeerzeugenden Klebeelement - bestehend aus einem Hauptkörper aus einem schmelzbaren Klebematerial und einem Heizdraht - versehen. Dabei wird zunächst das wärmeerzeugende Klebeelement in Längsrichtung an der Röhre angebracht und anschließend mittels eines Halters gemeinsam mit der Röhre bezüglich der Schlaucheinheit derart positioniert, dass das wärmeerzeugende Klebeelement gegenüber bzw. an der inneren Oberfläche der Schlaucheinheit ausgerichtet ist. Im Anschluss wird das wärmeerzeugende Klebeelement durch Anlegen einer Spannung an dem Heizdraht aktiviert, um die Röhre mit der Schlaucheinheit thermoplastisch zu verkleben.

### AUFGABENSTELLUNG

Der Erfindung liegt ausgehend vom Stand der Technik gemäß der Druckschrift DE 20 2017 107 890 U1 die Aufgabe zugrunde, einen flexiblen Schlauch, insbesondere Staubsaugerschlauch derart auszugestalten, dass der Schlauch eine gute Ableitfähigkeit für elektrostatische Aufladungen besitzt, gleichwohl die in diesem Zusammenhang oben zum Stand der Technik angesprochenen Probleme adressiert werden. Insbesondere soll der elektrisch ableitfähige, flexible Schlauch bei Einsatz einer im Verhältnis geringen Menge an elektrisch leitfähigen Materialien eine verbesserte Eignung zum Recycling besitzen. Die Erfindungsaufgabe umfasst ferner die Angabe eines Verfahrens zur Herstellung eines solchen elektrisch ableitfähigen, flexiblen Schlauchs und einer Vorrichtung zum Aufbringen eines elektrisch leitfähigen Fadens auf einem solchen Schlauch, das/die eine möglichst einfache, schnelle und kostengünstige Herstellung bzw. Teilkonfektionierung des Schlauchs mit wenigstens einem elektrisch leitfähigen Faden in großer Stückzahl ermöglicht.

### DARSTELLUNG DER ERFINDUNG

Diese Aufgaben werden durch einen flexiblen Schlauch, insbesondere Staubsaugerschlauch, mit den Merkmalen des Patentanspruchs 1, ein Verfahren zur Herstellung eines flexiblen Schlauchs mit den Verfahrensschritten des Patentanspruchs 8 bzw. eine Vorrichtung zum Aufbringen eines elektrisch leitfähigen Fadens an einer Außenseite eines flexiblen Schlauchs mit den Merkmalen des Patentanspruchs 12 gelöst. Vorteilhafte Ausgestaltungen der Erfindung sind Gegenstand der abhängigen Patentansprüche.

Bei einem flexiblen Schlauch, insbesondere Staubsaugerschlauch, der eine Wand hat, die mit einer Innenseite einen Hohlraum zum Fördern von Medien begrenzt und wenigstens an einer Außenseite eine Profilierung aufweist, die im Schnitt entlang einer Längsachse des Schlauchs gesehen eine Wellenform mit Erhebungen und Vertiefungen besitzt, wobei an der Außenseite der Wand zumindest eine elektrisch leitfähige Bahn vorgesehen ist, die um die Wand herum verläuft und in einem elektrischen Kontakt mit wenigstens einem elektrisch leitfähigen Faden steht, der voneinander abgewandte Enden des Schlauchs elektrisch verbindet; ist erfindungsgemäß der elektrisch leitfähige Faden im Wesentlichen entlang der Längsachse des Schlauchs und quer zur elektrisch leitfähigen Bahn verlaufend an der Außenseite der Wand befestigt.

Mit anderen Worten gesagt ist der elektrisch leitfähige Faden - anders als im oben diskutierten Stand der Technik - nicht in Umfangsrichtung des Schlauchs verlegt, sondern erstreckt sich in Längsrichtung des erfindungsgemäßen Schlauchs, wobei er die umlaufende elektrisch leitfähige Bahn unter einem elektrischen Kontakt kreuzt und damit quasi elektrisch kurzschließt. In der elektrisch leitfähigen Bahn als eine "erste elektrisch leitende Vorrichtung" gesammelte elektrostatische Ladungen werden somit direkt über den elektrisch leitfähigen Faden als eine "zweite elektrisch leitende Vorrichtung" zu den Enden des Schlauchs abgeleitet.

Da der elektrisch leitfähige Faden an der Wand des erfindungsgemäßen Schlauchs nicht um dessen Längsachse umläuft, sondern sich in einer Draufsicht gesehen entlang bzw. im Wesentlichen parallel zur Längsachse des Schlauchs erstreckt, wird im Vergleich zum oben geschilderten Stand der Technik weniger elektrisch leitfähiges Material für diese zweite elektrisch leitende Vorrichtung benötigt. Dies ist nicht nur im Hinblick auf einen vergleichsweise geringen elektrischen Widerstand von Vorteil, sondern bringt auch Kosten- und Gewichtsvorteile mit sich.

Diese Möglichkeit der Einflussnahme auf den elektrischen Widerstand des Schlauchs durch den erfindungsgemäß ausgebildeten bzw. angeordneten elektrisch leitfähigen Faden kann es je nach der gewünschten oder geforderten elektrischen Ableitfähigkeit auch gestatten, die Einzelwiderstände von Bahn und Faden anders zu verteilen, etwa die elektrische Ableitfähigkeit der elektrisch leitfähigen Bahn zu verringern, z.B. durch Reduktion des Rußgehalts in einem durch Zusatz von Ruß elektrisch leitfähig gemachten Kunststoffmaterial für die elektrisch leitfähige Bahn, was ebenfalls Kostenvorteile bietet.

Nachdem darüber hinaus der elektrisch leitfähige Faden an der Außenseite der Wand angebracht ist, ist es - wiederum im Vergleich zum eingangs abgehandelten Stand der Technik, bei dem sämtliche elektrisch leitenden Vorrichtungen im Schlauch, genauer dessen Wandung integriert sind - einfacher, den elektrisch leitfähigen Faden eines zu entsorgenden Schlauchs vom Rest des Schlauchs für Recyclingzwecke zu entfernen.

Nicht zuletzt gestattet die erfindungsgemäße Ausbildung des Schlauchs bei dessen Herstellung vorteilhaft ein (wenigstens) 2-stufiges Vorgehen, bei dem zunächst ein Grundschlauch mit der elektrisch leitfähigen Bahn als ersten elektrisch leitenden Vorrichtung hergestellt wird, bevor erst in einem zweiten Schritt dieser Grundschlauch durch Aufbringen des elektrisch leitfähigen Fadens als zweite elektrisch leitende Vorrichtung im Hinblick auf eine verbesserte elektrische Ableitfähigkeit veredelt wird. Infolge dieses modularen Aufbaus des Schlauchs ist es also möglich, Schläuche je nach Wunsch oder Erfordernis mit unterschiedlicher elektrischer Ableitfähigkeit aus einer Art von Baukasten herzustellen, was für eine hohe Flexibilität bei der Schlauchproduktion sorgt und auch Kostenvorteile bietet.

Der Begriff des "elektrisch leitfähigen Fadens" steht hier im allgemeinsten Verständnis für einen elektrischen Leiter, dessen Längserstreckung sehr viel größer ist als seine Breiten- und Dickenerstreckung. Dabei kann der "Faden" grundsätzlich auch elektrischer Leiter und Befestigungsmittel zugleich sein, wie es z.B. bei einem elektrisch leitfähig gemachten schmalen Klebeband oder einem in einer schmalen Längsspur aufgetragenen, elektrisch leitfähig gemachten Klebstoff der Fall ist, sei er je nach der auftretenden Verfestigungsart z.B. ein 2K- oder Mehrkomponentenkleber, ein unter sichtbarem Licht oder UV-Licht reagierender Klebstoff oder von thermoplastischer Natur (Schmelzkleber).

Handelt es sich bei dem elektrisch leitfähigen Faden und dessen Befestigungsmittel um zwei Bestandteile, ist es grundsätzlich möglich, den elektrisch leitfähigen Faden an der Profilierung des Schlauchs aufzulegen und dabei oder danach zu kaschieren bzw. zu beschichten, z.B. mittels eines Heißklebers, eines UV-Klebers oder UV-Lacks oder einer Spur aus einem geeignet reagierenden bzw. aushärtenden Kunststoffschaum oder Gießharz. Demgegenüber insbesondere im Hinblick auf eine kostengünstige und prozesssichere Herstellung bevorzugt ist es derzeit indes, wenn der elektrisch leitfähige Faden mittels eines Klebebands an der Außenseite der Wand befestigt ist. In einer zweckmäßigen Ausgestaltung kann das Klebeband hierbei den elektrisch leitfähigen Faden in Umfangsrichtung des Schlauchs gesehen zu beiden Seiten überdecken, was einem möglichst guten In-Kontakt-Halten des elektrisch leitfähigen Fadens mit der elektrisch leitfähigen Bahn förderlich ist.

Ferner kann vorgesehen sein, dass der elektrisch leitfähige Faden oder das den elektrisch leitfähigen Faden überdeckende Klebeband an der Außenseite der Wand - ggf. als weitere Veredelung - von einer Umflechtung des Schlauchs umgeben ist. Hierbei kann die Umflechtung vorteilhaft als (zusätzliche) Sicherung und/oder als (weiterer) Schutz des elektrisch leitfähigen Fadens an der Außenseite der Wand des Schlauchs dienen. Bei geeigneter Ausgestaltung der Vorrichtung zum Umflechten des flexiblen Schlauchs ist es auch möglich, den wenigstens einen elektrisch leitfähigen Faden während des Umflechtens an der Außenseite der Wand aufzubringen und zu befestigen. Eine Kombination von Befestigen des elektrisch leitfähigen Fadens mittels eines Klebebands und Umflechten des Schlauchs bietet sich insbesondere dann an, wenn das Aufbringen des elektrisch leitfähigen Fadens und das Umflechten an verschiedenen Orten und/oder zu unterschiedlichen Zeiten stattfinden.

Prinzipiell ist es möglich, die elektrisch leitfähige Bahn an beliebiger Stelle auf der Außenseite der Wand des Schlauchs vorzusehen, solange gewährleistet ist, dass der wenigstens eine elektrisch leitfähige Faden die elektrisch leitfähige Bahn elektrisch kontaktieren und kurzschließen kann. Insbesondere mit Blick auf eine möglichst leichte und zuverlässige Kontaktierung der elektrisch leitfähigen Bahn durch den elektrisch leitfähigen Faden ist es allerdings bevorzugt, wenn die elektrisch leitfähige Bahn auf der Außenseite der Wand nahe oder an den Erhebungen der Profilierung ausgebildet ist.

In zweckmäßiger Ausgestaltung des flexiblen Schlauchs kann des Weiteren vorgesehen sein, dass der Schlauch an einem oder beiden der voneinander abgewandten Enden mit einem Schlauchaufnahmestück aus einem elektrisch leitfähigen Material versehen ist, ggf. auch als Zwischenstück, welches am fertigen Schlauch ein weiteres Anschlussteil mit z.B. einem Konus oder einem Bajonett zur Gewährleistung eines ordnungsgemäßen Schlauchanschlusses an einem zugeordneten Endgerät (z.B. einem Sauger) oder Werkzeug vorzugsweise drehbar hält. Über das Schlauchaufnahmestück und das daran ggf. angebrachte Anschlussteil können sodann durch die elektrisch leitfähige Bahn des Schlauchs gesammelte und insbesondere über den elektrisch leitfähigen Faden zu den Schlauchenden weitergeleitete elektrostatische Ladungen an das Endgerät und dessen Erdung übertragen und damit abgeführt bzw. abgebaut werden. Ggf. können die Schlauchaufnahmestücke und/ oder die daran montierten Anschlussteile zusätzlich mit metallischen Kontakten versehen sein. Bei entsprechender Ausgestaltung der Schlauchaufnahmestücke und/oder der daran angebrachten Anschlussteile können über den Schlauch vorteilhaft auch elektrostatische Ladungen zu einem Endgerät, wie etwa einem Staubsauger, abgeleitet werden, die z.B. während eines Schleif- oder Poliervorgangs an/in einer Schleifmaschine entstehen. Dies kann insbesondere dann von Interesse sein, wenn die Maschine selbst nicht über einen geerdeten Netzanschluss verfügt oder alternativ mittels Druckluft oder unter Einsatz einer Akkutechnologie angetrieben wird.

Für die Anbringung der vorerwähnten Schlauchaufnahmestücke an den Schlauchenden bieten sich insbesondere die folgenden zwei Varianten an: Bei der ersten Variante kann, wenn die außenseitige Profilierung des Schlauchs schraubenförmig ist, das Ende des Schlauchs mit der schraubenförmigen Profilierung in einem zugeordneten Innengewindeabschnitt des Schlauchaufnahmestücks eingeschraubt sein, wobei der elektrisch leitfähige Faden zwischen der Profilierung und dem Innengewindeabschnitt unter Ausbildung eines elektrischen Kontakts geklemmt ist.

Eine solche Ausgestaltung gestattet vorteilhaft ein "Refitten" eines defekten Schlauchs, wie es etwa bei professionellen Anwendern erwünscht sein kann, indem das Schlauchaufnahmestück vom defekten Schlauch abgeschraubt, der defekte oder undichte Schlauchabschnitt abgeschnitten und das Schlauchaufnahmestück sodann auf den entsprechend gekürzten Schlauch wieder aufgeschraubt wird. Ein weiterer Vorteil dieser Variante besteht darin, dass sich bei einer Reparatur des Schlauchs die Wiederkontaktierung des elektrisch leitfähigen Fadens mit dem Schlauchaufnahmestück infolge der erwähnten Klemmung des elektrisch leitfähigen Fadens zwischen der Profilierung des Schlauchs und dem Innengewindeabschnitt besonders einfach gestaltet.

Ist eine solche Reparaturmöglichkeit des Schlauchs nicht erforderlich oder z.B. zur Verringerung des Herstellaufwands nicht erwünscht, kann bei der anderen Variante das Ende des Schlauchs in einem zugeordneten Aufnahmeabschnitt des Schlauchaufnahmestücks eingesteckt und mit dem Schlauchaufnahmestück mittels eines elektrisch leitfähigen Klebstoffs verklebt sein, in den der elektrisch leitfähige Faden unter Ausbildung eines elektrischen Kontakts hinein verläuft. Es ist natürlich auch möglich, beide Varianten an den Enden ein und desselben Schlauchs umzusetzen, wenn der Schlauch nicht nur mit Schlauchaufnahmestücken einer Variante bestückt werden soll.

Grundsätzlich kann der Grundschlauch zum Beispiel durch Blasformen eines geeigneten Kunststoffmaterials ausgebildet werden, ggf. auch mit einer in einem Folgeschritt um den Schlauch gewickelten elektrisch leitfähigen Bahn. Demgegenüber bevorzugt ist es indes, wenn die Wand des Schlauchs insgesamt aus einem schraubenförmig gewickelten Profil gebildet ist, wobei benachbarte Windungen des Profils mediendicht miteinander verbunden sind. Vorteile eines solchen gewickelten Schlauchs im Vergleich zu einem blasgeformten Schlauch bestehen insbesondere darin, dass der Schlauch mit einer im Wesentlichen glatten Innenfläche und demgemäß geringen Strömungsverlusten sowie nur schwacher Geräuschentwicklung im Betrieb ausgebildet werden kann und infolge einer guten Formbeständigkeit und Rückstellfähigkeit des Schlauchs auch höhere Saugleistungen realisierbar sind.

In einer bevorzugten Ausgestaltung des gewickelten Schlauchs sind die benachbarten Windungen des Profils mittels eines Schmelzklebers mediendicht miteinander verbunden. Dies gewährleistet eine prozesssichere, schnelle und kostengünstige Fertigung des Grundschlauchs. Andere Verbindungsmöglichkeiten, z.B. das Herstellen eines Stoffschlusses zwischen den einzelnen Profilwindungen mittels Laserschweißen, sind jedoch auch denkbar.

Verfahrensseitig sieht die vorliegende Erfindung ein Verfahren zur Herstellung eines flexiblen Schlauchs vor, welches zumindest die folgenden drei Verfahrensschritte a) bis c) umfasst: a) Ausbilden eines Grundschlauchs, der eine Wand hat, die mit einer Innenseite um eine Längsachse einen Hohlraum begrenzt und wenigstens an einer Außenseite eine Profilierung aufweist, die im Schnitt gesehen eine Wellenform mit Erhebungen und Vertiefungen besitzt, wobei die Wand aus einem elektrisch leitfähigen Material oder zumindest eine elektrisch leitfähige Bahn an der Außenseite der Wand ausgebildet wird, so dass die elektrisch leitfähige Bahn um die Wand herum verläuft; b) Aufbringen wenigstens eines elektrisch leitfähigen Fadens an der Außenseite der Wand, so dass der elektrisch leitfähige Faden im Wesentlichen entlang der Längsachse und quer zur elektrisch leitfähigen Bahn verläuft; und c) Befestigen des elektrisch leitfähigen Fadens an der Außenseite der Wand, so dass der elektrisch leitfähige Faden die elektrisch leitfähige Bahn elektrisch kontaktiert.

Wesentlich ist hier die Trennung der Verfahrensschritte a) des Ausbildens des Grundschlauchs einerseits sowie b) des Aufbringens und c) des Befestigens des elektrisch leitfähigen Fadens an der Außenseite der Wand andererseits. Im Ergebnis führt dies zu den vorbeschriebenen Recyclingvorteilen, denn der nachträglich auf der Außenseite der Wand aufgebrachte/befestigte elektrisch leitfähige Faden lässt sich grundsätzlich leichter wieder entfernen, als ein Leiter, der integraler Bestandteil des Grundschlauchs ist.

Diese Trennung der Verfahrensschritte a) einerseits und b) bzw. c) andererseits bietet aber auch den Vorteil, dass in der Art eines Baukastensystems ein Schlauch desselben Grundtyps, der zwar die elektrisch leitfähige Bahn aufweist, jedoch (noch) keine gesteigerte elektrische Ableitfähigkeit besitzt, je nach den jeweiligen elektrischen Ableiterfordernissen durch Aufbringen/Befestigen des elektrisch leitfähigen Fadens weiter veredelt werden kann, oder eben nicht, wenn dies nicht notwendig oder erwünscht ist. Auch ist es so möglich, einen Schlauch desselben Grundtyps durch Aufbringen/Befestigen verschiedener elektrisch leitfähiger Fäden, die sich z.B. in der Art, dem Material, den Abmessungen und/oder der Anzahl unterscheiden, den jeweiligen Erfordernissen oder Wünschen entsprechend gezielt weiter elektrisch auszurüsten.

Wie weiter oben schon erwähnt, kann im Schritt a) des Ausbildens des Grundschlauchs grundsätzlich ein Blasformvorgang zum Einsatz kommen. Demgegenüber insbesondere im Hinblick auf eine möglichst einfache Integration der elektrisch leitfähigen Bahn im Schlauch bevorzugt ist es allerdings, wenn im Schritt a) des Ausbildens des Grundschlauchs zunächst ein Profil aus einem elektrisch leitfähigen Kunststoffmaterial extrudiert oder aus zwei Kunststoffmaterialien unterschiedlicher elektrischer Leitfähigkeit koextrudiert wird, so dass das Profil zumindest eine elektrisch leitfähige Bahn umfasst, worauf das Profil zur Ausbildung der Wand des Grundschlauchs schraubenförmig gewickelt wird, wobei benachbarte Windungen des Profils mediendicht miteinander verbunden werden. Bevorzugt werden hierbei in besonders prozesssicherer Weise die benachbarten Windungen des Profils mittels eines Schmelzklebers mediendicht miteinander verbunden.

Auch die Schritte b) des Aufbringens und c) des Befestigens des elektrisch leitfähigen Fadens an der Außenseite der Wand können prinzipiell nacheinander ausgeführt werden, namentlich dann, wenn es sich bei dem elektrisch leitfähigen Faden und dessen Befestigungsmittel um zwei distinkte Bestandteile des Schlauchs handelt. Demgegenüber insbesondere im Hinblick auf eine möglichst schnelle und effiziente Fertigung bevorzugt ist es jedoch, wenn die Schritte b) des Aufbringens und c) des Befestigens des elektrisch leitfähigen Fadens an der Außenseite der Wand zugleich durchgeführt werden, auch wenn es sich bei dem elektrisch leitfähigen Faden und dessen Befestigungsmittel um zwei abgegrenzte Bestandteile des Schlauchs handelt.

Nach Durchführung der Schritte a) bis c) liegt der Schlauch bereits als ein Kunststoff-Halbzeug vor, das ggf. als Rollenware zur weiteren Konfektionierung z.B. an den Hersteller eines Endgeräts, wie eines Staubsaugers, geliefert werden kann. Die bevorzugte weitere Konfektionierung des Schlauchs kann aber auch beim Schlauchhersteller, z.B. unmittelbar im Anschluss an die Herstellung des Kunststoff-Halbzeugs erfolgen, indem nach dem Schritt c) des Befestigens des elektrisch leitfähigen Fadens an der Außenseite der Wand an einem oder beiden der voneinander abgewandten Enden des abgelängten Schlauchs ein Schlauchaufnahmestück aus einem elektrisch leitfähigen Material angebracht wird, das den elektrisch leitfähigen Faden elektrisch kontaktiert.

Vorrichtungsseitig wird gemäß der Erfindung eine Vorrichtung zum Aufbringen eines elektrisch leitfähigen Fadens an einer Außenseite eines flexiblen Schlauchs vorgeschlagen, der dort, d.h. an seiner Außenseite eine Profilierung aufweist, die im Schnitt entlang einer Längsachse des Schlauchs gesehen eine Wellenform mit Erhebungen und Vertiefungen besitzt, mit der Besonderheit, dass ein Applikator für den elektrisch leitfähigen Faden vorgesehen ist, der ein drehbares, stock- oder zellenradähnliches Applikatorrad hat, an dessen Außenumfang der elektrisch leitfähige Faden zuführbar ist und das angepasst ist, mit der Profilierung des in einer Schlauchauflage einlegbaren Schlauchs in einen formschlüssigen Eingriff zu gelangen, so dass bei drehendem Applikatorrad eine relative Vorschubbewegung zwischen Schlauch und Applikator erfolgt, bei der das Applikatorrad den elektrisch leitfähigen Faden entlang der Längsachse des Schlauchs den Erhebungen und Vertiefungen folgend an der Profilierung des Schlauchs aufbringt.

Durch die erfindungsgemäße Ausgestaltung des Applikatorrads, welches mit der Profilierung an der Außenseite des Schlauchs in der Art eines Zahnstangenantriebs zu kämmen vermag, ergibt sich vorteilhaft eine Zwangskopplung von Vorschubbewegung und Auftrags- bzw. Aufbringbewegung für den elektrisch leitfähigen Faden. Hiermit kann zum einen sichergestellt werden, dass pro Länge Schlauch stets eine entsprechende bzw. zugeordnete Länge an elektrisch leitfähigem Faden abgelegt bzw. aufgebracht wird, was insbesondere einem gleichmäßigen und/oder spannungsfreien Aufbringen des elektrisch leitfähigen Fadens an der Profilierung des Schlauchs förderlich sein kann.

Zum anderen ist es möglich, vorteilhaft nur einen Antrieb zu verwenden, um beide Bewegungen - relative Vorschubbewegung zum Schlauch und Auftrags- bzw. Aufbringbewegung für den elektrisch leitfähigen Faden - zu generieren. So kann z.B. der Applikator bezüglich des Schlauchs oder der Schlauch bezüglich des Applikators - aktiv - bewegt werden (relativer Vorschub), während das Applikatorrad als Folge des formschlüssigen Eingriffs mit dem Schlauch - passiv - auf diesem abrollt und den elektrisch leitfähigen Faden ablegt (Auftrag bzw. Aufbringung). Auch ist es möglich, den Applikator festzuhalten und das Applikatorrad - aktiv - drehend anzutreiben (Auftrag bzw. Aufbringung des elektrisch leitfähigen Fadens), wobei der Schlauch infolge des formschlüssigen Eingriffs zwischen dem Applikatorrad und der Profilierung des Schlauchs - passiv - unter dem Applikatorrad weggezogen wird (relativer Vorschub). Darüber hinaus besteht die Möglichkeit, den Applikator bewegbar zu gestalten und das Applikatorrad - aktiv - drehend anzutreiben (Auftrag bzw. Aufbringung des elektrisch leitfähigen Fadens), so dass sich der Applikator mit dem Applikatorrad aufgrund des Formschlusses zwischen dem Applikatorrad und der Profilierung des Schlauchs - passiv - bezüglich des ggf. geeignet festgehaltenen Schlauchs bewegt (relativer Vorschub).

Werden wenigstens zwei Antriebe vorgesehen, die jeweils dem Applikator, dem Applikatorrad oder dem Schlauch zugeordnet sind, so ist es möglich, die generierten Bewegungen hinsichtlich der Bewegungsausführung (Geschwindigkeit, Beschleunigung) etwa unter dem Einsatz einer geeigneten Elektronik weiter zu koordinieren, beispielsweise um den elektrisch leitfähigen Faden an der Profilierung des Schlauchs mit geringem Zug oder besonders "locker", also zugentlastet auf- bzw. anzubringen.

Eines der Kriterien dafür, welche Bestandteile bzw. Baugruppen der Vorrichtung stationär und welche beweglich ausgebildet bzw. angeordnet sind, ist die Länge des mit dem elektrisch leitfähigen Faden zu versehenden flexiblen Schlauchs. Bei einem Schlauch als Rollenware bzw. in Endlosproduktion bietet es sich z.B. an, den Applikator feststehend auszubilden und demgegenüber den Schlauch bezüglich des Applikators zu bewegen. Insbesondere im Hinblick auf eine einfache Umsetzung des Aufbringprozesses bei definiert langen Schläuchen, ist derzeit eine Ausbildung der Vorrichtung bevorzugt, bei der die Schlauchauflage an einem Gestell der Vorrichtung ortsfest angebracht ist, wobei der Applikator einen Applikatorschlitten aufweist, der das Applikatorrad trägt und an dem Gestell entlang der Schlauchauflage verschiebbar geführt ist.

Ferner ist es auch mit Blick auf eine sichere Prozessführung bevorzugt, wenn das Applikatorrad mit einem Drehantrieb antriebsverbunden ist, so dass das Applikatorrad aktiv drehend angetrieben werden kann.

Des Weiteren ist eine Ausgestaltung der Vorrichtung bevorzugt, bei der der Applikator einen Applikatorarm aufweist, an dem das Applikatorrad drehbar gelagert ist und der bezüglich der Schlauchauflage um eine wahlweise feststellbare Schwenkachse verschwenkbar ist. So ist es möglich, die Vorrichtung mit ihrem Applikator ohne große Umrüstarbeiten für Schläuche unterschiedlicher Dicke und/oder Grundform (z.B. am Außenumfang zylindrisch oder konisch) einzusetzen. Bei etwa konischen Schläuchen kann das Applikatorrad so problemlos der über der Länge des Schlauchs zu- bzw. abnehmenden Dicke des Schlauchs folgen. Durch Festsetzen der Schwenkachse für den Applikatorarm kann zudem bei beispielsweise einem am Außenumfang zylindrischen Schlauch unter Nutzung der Eigenelastizität des Schlauchs vorteilhaft ein gewisser Anpressdruck des Applikatorrads am Schlauch erzeugt und eingestellt werden.

Vorzugsweise ist die Anordnung weiterhin derart getroffen, dass der Applikatorarm mit dem Applikatorrad und seiner Schwenkachse so bezüglich der Schlauchauflage positioniert ist, dass um die Schwenkachse ein Drehmoment in Richtung der Schlauchauflage resultiert, und/oder dass der Applikatorarm um seine Schwenkachse in Richtung der Schlauchauflage federnd vorgespannt ist. Das Eigengewicht des Applikatorarms mit den daran montierten Komponenten bzw. dessen Schwerpunktlage bezüglich der Schwenkachse und/oder die auf den Applikatorarm wirkende Federkraft können bei einer solchen Ausgestaltung auf einfache Weise so vorgesehen oder gewählt werden, dass das Applikatorrad beim Aufbringen des elektrisch leitfähigen Fadens auf dem Schlauch stets mit einer definierten Andrückkraft an dem Schlauch anliegt.

Wie eingangs schon erwähnt, ist es grundsätzlich möglich, zunächst den elektrisch leitfähigen Faden vermittels des Applikatorrads an bzw. in der Profilierung des Schlauchs zu positionieren und erst in einem Folgeschritt am Schlauch zu befestigen, so dass der elektrisch leitfähige Faden mit der elektrisch leitfähigen Bahn des Schlauchs dauerhaft in einem elektrischen Kontakt steht. Insbesondere im Hinblick auf einen möglichst großen Durchsatz und eine hohe Prozesssicherheit bei der Schlauchfertigung ist es jedoch bevorzugt, wenn das Aufbringen und das Befestigen des elektrisch leitfähigen Fadens am Schlauch zugleich erfolgen. Für diesen Zweck ist derzeit eine Ausgestaltung der Vorrichtung bevorzugt, bei der der Applikator eine Zuführeinrichtung für den elektrisch leitfähigen Faden und eine Zuführeinrichtung für ein Klebeband aufweist, wobei der elektrisch leitfähige Faden und das Klebeband von den Zuführeinrichtungen einem Paar von Führungsrollen zuführbar sind, die angepasst sind, Faden und Klebeband zu vereinigen, bevor eine Weiterleitung an das Applikatorrad erfolgt. Damit kann zum einen auf einfache Weise sichergestellt werden, dass der elektrisch leitfähige Faden eine genaue Positionierung und gute Befestigung am Schlauch erfährt, zum anderen kann so der elektrisch leitfähige Faden durch das Klebeband beim Aufbringen gegen zum Beispiel einen übermäßigen Zug geschützt werden.

Schließlich ist es bevorzugt, wenn das Applikatorrad zwischen zwei Nabenabschnitten eine Mehrzahl von gleichmäßig über dem Umfang verteilten Achsstiften aufweist, die jeweils eine hohlzylindrische Hülse als Andrückkörper für den elektrisch leitfähigen Faden drehbar lagern. Auch diese Maßnahme ist während des Aufbringens und Befestigens des elektrisch leitfähigen Fadens am Schlauch vorteilhaft einer mechanischen Entlastung des elektrisch leitfähigen Fadens förderlich.

Weitere Merkmale, Eigenschaften und Vorteile des erfindungsgemäßen, elektrisch ableitfähigen, flexiblen Schlauchs, des erfindungsgemäßen Verfahrens zur Herstellung eines solchen Schlauchs und der erfindungsgemäßen Vorrichtung zum Aufbringen eines elektrisch leitfähigen Fadens an einer profilierten Außenseite eines flexiblen Schlauchs ergeben sich für den Fachmann aus der nachfolgenden Beschreibung bevorzugter Ausführungsbeispiele.

### KURZE BESCHREIBUNG DER ZEICHNUNGEN

Im Folgenden wird die Erfindung anhand bevorzugter Ausführungsbeispiele unter Bezugnahme auf die beigefügten, teilweise schematischen Zeichnungen näher erläutert, in denen gleiche oder entsprechende Teile oder Abschnitte mit den gleichen Bezugszeichen versehen sind. In den Zeichnungen zeigen:
- Fig. 1: eine zweifach unterbrochene Seitenansicht eines flexiblen Schlauchs, namentlich Staubsaugerschlauchs, nach einem ersten Ausführungsbeispiel der Erfindung, der zu beiden Seiten mit einem Schlauchaufnahmestück versehen ist;
- Fig. 2: eine zweifach unterbrochene Längsschnittansicht des flexiblen Schlauchs gemäß Fig. 1;
- Fig. 3: eine im Maßstab vergrößerte Darstellung des Details III in Fig. 2 in einem mittleren Bereich des flexiblen Schlauchs gemäß Fig. 1;
- Fig. 4: eine im Maßstab vergrößerte Darstellung des Details IV in Fig. 2 an dem in den Fig. 1 und 2 linken Schlauchaufnahmestück des flexiblen Schlauchs gemäß Fig. 1;
- Fig. 5: eine im Maßstab vergrößerte Darstellung des Details V in Fig. 2 an dem in den Fig. 1 und 2 rechten Schlauchaufnahmestück des flexiblen Schlauchs gemäß Fig. 1;
- Fig. 6: eine im Maßstab vergrößerte, abgebrochene Draufsicht auf den flexiblen Schlauch gemäß Fig. 1, mit Blickrichtung entsprechend dem Pfeil VI in Fig. 1, wobei ein mittels eines Klebebands an einer Außenseite des Schlauchs befestigter elektrisch leitfähiger Faden zur Ableitung elektrostatischer Ladungen gestrichelt dargestellt ist;
- Fig. 7: eine einfach unterbrochene, perspektivische Ansicht einer erfindungsgemäßen Vorrichtung zum Aufbringen des elektrisch leitfähigen Fadens auf dem flexiblen Schlauchs gemäß Fig. 1, von schräg oben / seitlich links, mit Blick auf einen Applikator für den elektrisch leitfähigen Faden in einer Startposition bezüglich des Schlauchs;
- Fig. 8: eine entsprechend der Fig. 7 einfach unterbrochene, perspektivische Ansicht der Vorrichtung gemäß Fig. 7 von schräg oben / seitlich links, bei der sich der Applikator in einer mittleren Position über dem flexiblen Schlauch befindet;
- Fig. 9: eine wiederum analog der Fig. 7 einfach unterbrochene, perspektivische Ansicht der Vorrichtung gemäß Fig. 7 von schräg oben / seitlich links, bei der sich der Applikator in einer Endposition bezüglich des flexiblen Schlauchs befindet;
- Fig. 10: eine im Maßstab vergrößerte Darstellung des Details X in Fig. 8, zur Veranschaulichung weiterer Details des Applikators der Vorrichtung gemäß Fig. 7;
- Fig. 11: eine zu beiden Seiten abgebrochene Seitenansicht der Vorrichtung gemäß Fig. 7, mit Blick auf den in der mittleren Position entsprechend Fig. 8 befindlichen Applikator;
- Fig. 12: eine Vorderansicht der Vorrichtung gemäß Fig. 7, mit Blickrichtung von rechts in Fig. 11;
- Fig. 13: eine Schnittansicht der Vorrichtung gemäß Fig. 7 entsprechend der versetzten Schnittverlaufslinie XIII-XIII in Fig. 11;
- Fig. 14: eine zu beiden Seiten abgebrochene Schnittansicht der Vorrichtung gemäß Fig. 7 entsprechend der Schnittverlaufslinie XIV-XIV in Fig. 12;
- Fig. 15: eine zu beiden Seiten abgebrochene Seitenansicht eines flexiblen Schlauchs, namentlich Staubsaugerschlauchs, nach einem zweiten Ausführungsbeispiel der Erfindung, bei dem der Schlauch auf seiner Außenseite mit einer Umflechtung versehen ist;
- Fig. 16: eine zu beiden Seiten abgebrochene Längsschnittansicht des flexiblen Schlauchs gemäß Fig. 15; und
- Fig. 17: eine im Maßstab vergrößerte Darstellung des Details XVII in Fig. 16 in einem mittleren Bereich des flexiblen Schlauchs gemäß Fig. 15.

### DETAILLIERTE BESCHREIBUNG DER AUSFÜHRUNGSBEISPIELE

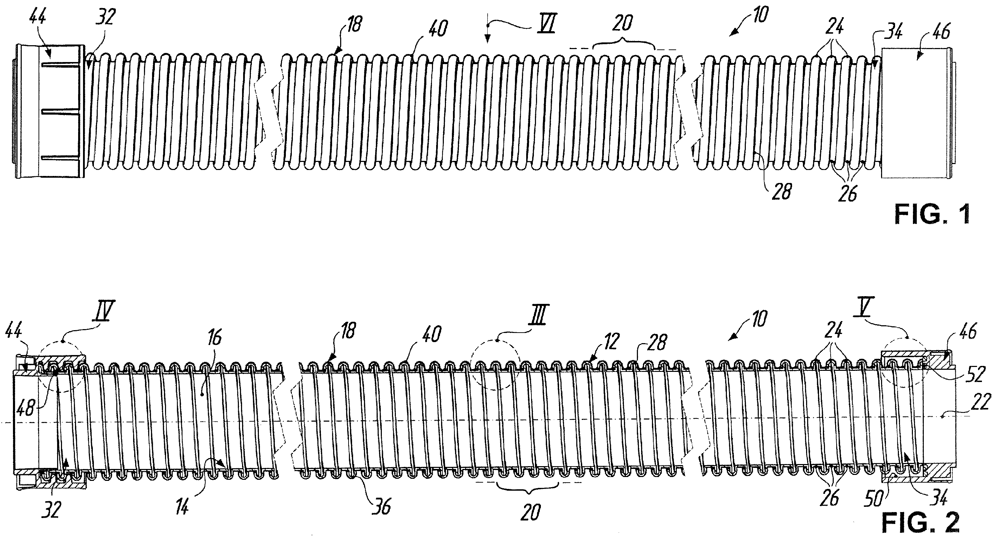

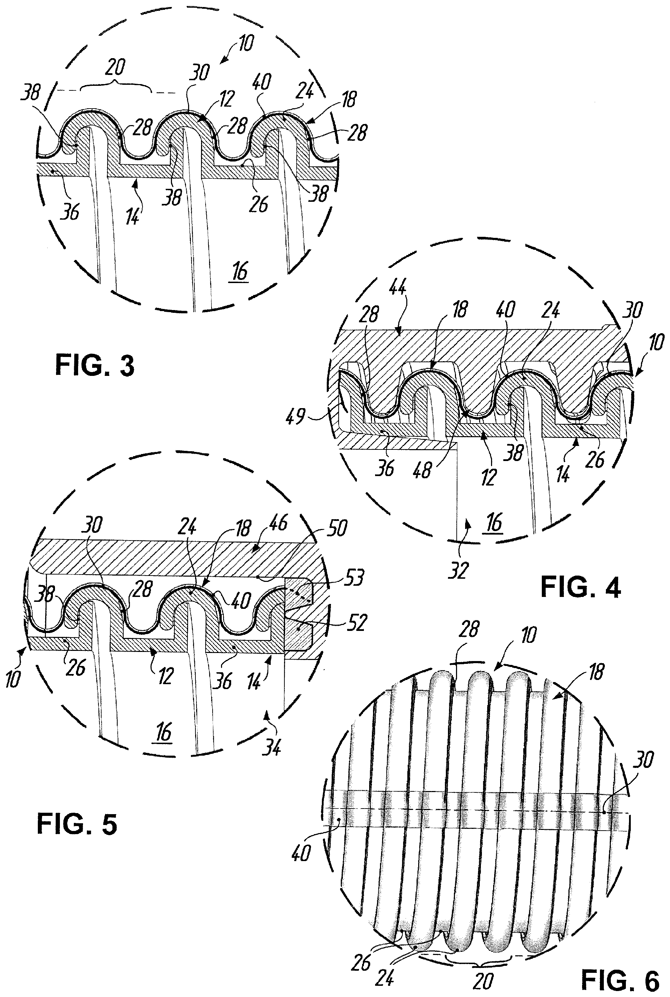

In den Figuren ist beispielhaft für einen flexiblen Schlauch ein Staubsaugerschlauch allgemein mit dem Bezugszeichen 10 beziffert. Der Schlauch 10 hat gemäß insbesondere den Fig. 2 bis 5 bzw. 16 und 17 eine Wand 12, die mit einer Innenseite 14 einen Hohlraum 16 zum Fördern von Medien begrenzt. An einer Außenseite 18 weist die Wand 12 eine Profilierung 20 auf, die im Schnitt entlang einer Längsachse 22 des Schlauchs 10 gesehen eine Wellenform mit Erhebungen 24 und Vertiefungen 26 besitzt. Wie am besten in den Fig. 3 bis 6 und 17 zu erkennen ist, ist an der Außenseite 18 der Wand 12 wenigstens eine elektrisch leitfähige Bahn 28 vorgesehen, die um die Wand 12 herum verläuft und dazu dient, elektrostatische Ladungen zu sammeln und weiterzuleiten. Wie nachfolgend noch näher erläutert wird, steht die elektrisch leitfähige Bahn 28 in einem elektrischen Kontakt mit wenigstens einem elektrisch leitfähigen Faden 30, der voneinander abgewandte Enden 32, 34 des Schlauchs 10 elektrisch verbindet, um die elektrostatischen Ladungen dorthin abzuleiten.

Hierbei verläuft der elektrisch leitfähige Faden 30 gemäß z.B. Fig. 6 im Wesentlichen entlang der Längsachse 22 des Schlauchs 10 und quer zur elektrisch leitfähigen Bahn 28 bzw. Letztere kreuzend, wobei der elektrisch leitfähige Faden 30 an der Außenseite 18 der Wand 12 befestigt ist, wie insbesondere in den Fig. 3 bis 5 und 17 zu sehen ist. In diesen Ausführungsbeispielen folgt der elektrisch leitfähige Faden 30 den Erhebungen 24 und Vertiefungen 26 der Profilierung 20, wobei der Faden 30 an den Erhebungen 24 und - zur Herstellung eines elektrischen Kontakts - natürlich an der elektrisch leitfähigen Bahn 28 direkt anliegt, während der Faden 30 im Bereich der Vertiefungen 26 einen gewissen Abstand zur Wand 12 hat. Im Vergleich zu einem ebenfalls möglichen "gestreckteren" Verlauf des elektrisch leitfähigen Fadens 30 kann so z.B. eine größere Flexibilität des Schlauchs 10 erzielt werden.

In den dargestellten Ausführungsbeispielen handelt es sich um einen gewickelten, flexiblen Schlauch 10, d.h. einen Schlauch 10, dessen Wand 12 aus einem schraubenförmig um die Längsachse 22 gewickelten Profil 36 gebildet ist, wobei benachbarte Windungen des Profils 36 mediendicht miteinander verbunden sind. Das hier beispielhaft gezeigte Profil 36 hat im Querschnitt gesehen zwei Bereiche, nämlich einen in den Fig. 3 bis 5 und 17 jeweils rechten Bereich, dessen Querschnitt im Wesentlichen die Form des Buchstabens U in "eckiger" Schreibweise aufweist und der am gewickelten Schlauch 10 die Vertiefungen 26 der Profilierung 20 bildet, und einen in den Fig. 3 bis 5 und 17 jeweils linken Bereich, welcher im Querschnitt betrachtet im Wesentlichen die Form eines liegenden bzw. um 90° im Uhrzeigersinn gekippten Buchstabens C besitzt und am gewickelten Schlauch 10 die Erhebungen 24 der Profilierung 20 bildet. Wie in den Fig. 3 bis 5 und 17 gut zu erkennen ist, ist der C-förmige Bereich einer Windung des Profils 36 quasi über den rechten Schenkel des U-förmigen Bereichs einer benachbarten Windung des Profils 36 "gehakt", so dass sich dort jeweils eine kurze Profilüberlappung entlang der Längsachse 22 ergibt. Im Bereich dieser Profilüberlappung ist zur mediendichten Verbindung der benachbarten Windungen des Profils 36 z.B. ein Schmelzkleber 38 vorgesehen, der die in den Fig. 3 bis 5 und 17 gezeigte, schraubenförmig umlaufende Naht bildet.

Aus den Fig. 3 bis 5 und 17 ist auch ersichtlich, dass die elektrisch leitfähige Bahn 28 des Schlauchs 10 auf der Außenseite 18 der Wand 12 nahe oder an den Erhebungen 24 der Profilierung 20 ausgebildet ist, und zwar als ein Teilbereich des Profils 36, der im gewickelten Zustand des Profils 36 ebenfalls schraubenförmig um die Längsachse 22 umläuft.

In den dargestellten Ausführungsbeispielen ist das Profil 36 aus zwei Kunststoffmaterialien unterschiedlicher elektrischer Leitfähigkeit koextrudiert, so dass das Profil 36 die elektrisch leitfähige Bahn 28 umfasst. Hierbei kann ein Hauptteil des Profils 36 aus einem nicht leitfähigen Kunststoffmaterial, wie z.B. Polyethylen (PE), Polypropylen (PP) oder einem Ethylen-Vinylacetat-Copolymer (EVAC) bestehen, während die elektrisch leitfähige Bahn 28 aus einem leitfähigen Kunststoffmaterial gebildet ist. Bei Letzterem kann es sich beispielsweise um ein PE-, PP- oder EVAC-Basismaterial handeln, welches durch Zusatz leitfähiger Bestandteile, wie etwa Rußpartikel, leitfähig gemacht ist.

Alternativ ist es den jeweiligen elektrischen Ableitungserfordernissen entsprechend aber auch möglich, das Profil 36 vollständig aus solchen elektrisch leitfähigen Kunststoffmaterialien zu koextrudieren, ggf. sogar materialeinheitlich zu extrudieren. In einem solchen Fall bildet das Profil insgesamt mit seiner Außenfläche die elektrisch leitfähige Bahn.

Was den Schmelzkleber 38 angeht, so kann dieser ebenfalls aus einem Kunststoffmaterial, wie z.B. PE oder EVAC, bestehen, das entweder nicht leitfähig ist oder leitfähig gemacht ist.

Unter dem hier allgemein verwendeten Begriff des "elektrisch leitfähigen Fadens" 30 sollen zum einen verstanden werden ein metallisierter Faden, Kordel oder Zwirn, z.B. ein elastischer Zwirn aus einem Kunststoff, wie Polyamid (PA), der etwa mit einer Silberbeschichtung oder einer Beschichtung aus Kupfer, Gold oder Platin versehen ist, was eine sehr gute Leitfähigkeit verspricht, oder aber eine Spur oder ein (Klebe)Band aus einem geeignet elektrisch leitfähig gemachten Kunststoff oder -harz, zum anderen aber auch rein metallische Leiter, wie Drähte oder Litzen aus Kupfer od.dgl., wobei sich die konkrete Ausgestaltung des elektrisch leitfähigen Fadens 30 in Abhängigkeit davon ergibt, welche Anforderungen an den Schlauch 10 insbesondere im Hinblick auf dessen elektrische und mechanische Eigenschaften gestellt werden. So muss z.B. bei einem flexiblen Schlauch 10, der im Einsatz größeren Biegewechsel- oder Zugbeanspruchungen ausgesetzt ist, gewährleistet sein, dass der elektrisch leitfähige Faden 30 nicht bzw. nicht vorzeitig bricht oder reißt, was metallische Leiter, die sich ggf. kaltverfestigen können, für einen solchen Anwendungsfall eher ausschließt. Hinsichtlich der elektrischen Ableitfähigkeit kann etwa eine Vorgabe dahingehend bestehen, dass der Gesamtschlauch nur einen vorbestimmten Ohmschen Widerstand besitzen darf, der beispielsweise durch geeignete Wahl des elektrisch leitfähigen Fadens 30 erzielt werden kann.

Wie weiter oben schon erwähnt, ist wenigstens ein elektrisch leitfähiger Faden 30 vorgesehen, d.h. den jeweiligen Anforderungen entsprechend können auch mehrere elektrisch leitfähige Fäden vorgesehen sein, um z.B. in einer Gesamtanordnung den elektrischen Widerstand zu reduzieren und/oder eine - ggf. mehrfach - redundante Gesamtanordnung bereitzustellen. Hierbei können die elektrisch leitfähigen Fäden 30 nebeneinander verlaufen oder sich wenigstens teilweise unter einem elektrischen Kontakt miteinander kreuzen bzw. überschneiden. In einem solchen Fall erfolgt die elektrische Verbindung der voneinander abgewandten Enden 32, 34 des Schlauchs 10 und die elektrische Kontaktierung der elektrisch leitfähigen Bahn 28 durch die Gesamtanordnung von elektrisch leitfähigen Fäden 30. Mit anderen Worten gesagt ist es prinzipiell möglich, dass keiner der elektrisch leitfähigen Fäden 30 einer solchen Gesamtanordnung alleine die gesamte Strecke zwischen den voneinander abgewandten Enden 32, 34 des Schlauchs 10 überbrückt, wohl aber die Gesamtanordnung, und/oder nur ein Teil bzw. einer der elektrisch leitfähigen Fäden 30 einer solchen Gesamtanordnung die elektrisch leitfähige Bahn 28 kontaktiert.

Wie des Weiteren insbesondere die Fig. 3 bis 6 und 17 zeigen, ist der wenigstens eine elektrisch leitfähige Faden 30 in den dargestellten Ausführungsbeispielen mittels eines Klebebands 40 an der Außenseite 18 der Wand 12 befestigt. Gemäß Fig. 6 kann das Klebeband 40 hierbei den elektrisch leitfähigen Faden 30 in Umfangsrichtung des Schlauchs 10 gesehen zu beiden Seiten überdecken. Das Klebeband 40 ist dabei so auszugestalten, dass seine Klebeseite zuverlässig am Kunststoffmaterial der Wand 12 bzw. des Profils 36 haftet. Als Rücken für das Klebeband 40 kommen in Frage Folien, Vliese oder Gewebe aus einem Kunststoffmaterial, wie beispielsweise PE, PP, Polyvinylchlorid (PVC), Polyethylenterephthalat (PET), Polyimid (PI) oder Polyurethan (PUR), je nach dem Einsatzgebiet des Schlauchs 10.

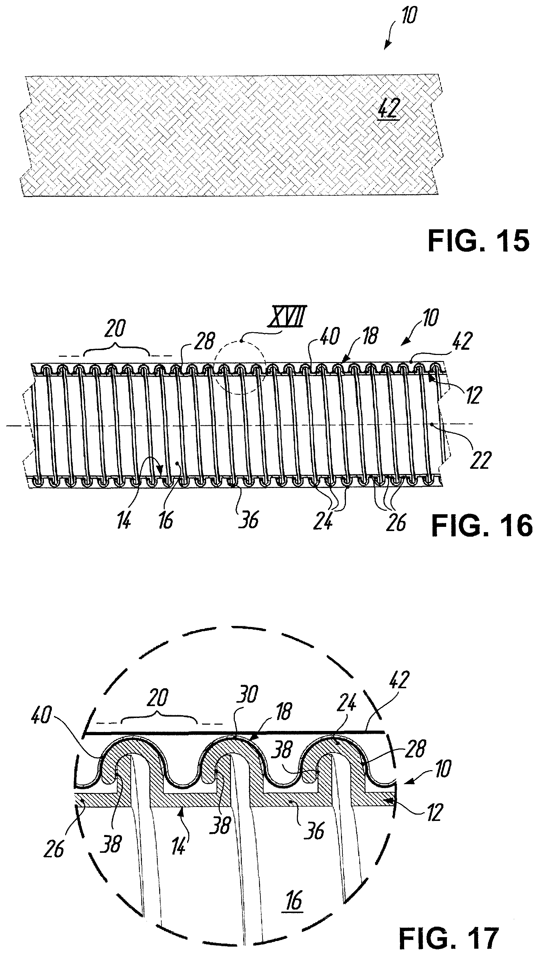

Bei dem Ausführungsbeispiel gemäß den Fig. 15 bis 17 besteht noch eine Besonderheit darin, dass das den elektrisch leitfähigen Faden 30 überdeckende Klebeband 40 an der Außenseite 18 der Wand 12 des Schlauchs 10 von einer Umflechtung 42 umgeben ist. Die Umflechtung 42 kann aus monofilen und/oder multifilen Fäden aus einem thermoplastischen Kunststoff, wie etwa PA oder PE bestehen. Die multifilen Fäden legen sich beim Biegen des Schlauchs 10 auf der Zugseite flach an den Schlauch 10 an und Stauchen auf der Druckseite des Schlauchs 10 quer zum Faden und somit auch hin zur Wand 12 des Schlauchs 10, so dass die Umflechtung 42 immer an der Wand 12 anliegt. Bei einem besonders vorteilhaften Mischungsverhältnis von 50% multifilen Fäden zu 50% monofilen Fäden bleibt die geflochtene Oberfläche des Schlauchs 10 zudem stets geschlossen. Der elektrisch leitfähige Faden kann somit in einem hier nicht dargestellten Ausführungsbeispiel auch ohne das ihn überdeckende Klebeband mittels der Umflechtung in Position an der Wand gehalten werden, wobei freilich durch geeignete Platzierung der elektrisch leitfähigen Bahn an den Erhebungen der Profilierung dafür Sorge zu tragen ist, dass der elektrisch leitfähigen Faden die elektrisch leitfähige Bahn unter Anlage kreuzt und somit kontaktiert.

Der vorbeschriebene Schlauch 10 kann grundsätzlich als Rollenware beim Schlauchhersteller produziert und an z.B. die Hersteller von einschlägigen Endgeräten, wie beispielsweise Staubsaugern, geliefert werden, wo dann die weitere Konfektionierung des Schlauchs 10 erfolgt, die zumeist das Ablängen des Schlauchs 10 und das endseitige Versehen des Schlauchs 10 mit anwendungsspezifischen Endstücken umfasst. Es ist aber auch möglich - und häufig der Fall - dass der Schlauchhersteller den Schlauch 10 noch weiter konfektioniert.

In dem in den Fig. 1 und 2 gezeigten Ausführungsbeispiel ist der Schlauch 10 abgelängt und an beiden der voneinander abgewandten Enden 32, 34 mit einem Schlauchaufnahmestück 44, 46 aus einem elektrisch leitfähigen Material versehen, über das eine gezielte Ableitung von elektrostatischen Aufladungen an beispielsweise ein Endgerät und dessen Erdung erfolgen kann. Beispielhaft sind in den Fig. 1, 2, 4 und 5 zwei verschiedene Arten von Schlauchaufnahmestücken 44, 46 an ein und demselben Schlauch 10 dargestellt. Diese Schlauchaufnahmestücke 44, 46 können ggf. mit einem weiteren anwendungsspezifischen Endstück (nicht gezeigt) verbunden bzw. versehen sein, um etwa eine an die jeweilige Anwendung angepasste Anschlussgeometrie bereitzustellen, oft aber auch um eine relative Verdrehmöglichkeit zwischen Schlauchaufnahmestück und Endstück vorzusehen. Dem Fachmann sind solche Schlauchaufnahme- und Endstücke hinlänglich bekannt, so dass nachfolgend nur kurz darauf eingegangen werden soll, wie das jeweilige Schlauchaufnahmestück 44, 46 an der Wand 12 des Schlauchs 10 befestigt ist und dabei ein elektrischer Kontakt zwischen dem elektrisch leitfähigen Faden 30 und dem jeweiligen Schlauchaufnahmestück 44, 46 erfolgt.

Bei dem in den Fig. 1 und 2 linken Schlauchaufnahmestück 44 des Schlauchs 10, dessen außenseitige Profilierung 20 wie vorbeschrieben schraubenförmig ist, ist das Ende 32 des Schlauchs 10 mit der schraubenförmigen Profilierung 20 in einem zugeordneten Innengewindeabschnitt 48 des ringförmigen Schlauchaufnahmestücks 44 eingeschraubt. Eine derartige - reversible - Schraubverbindung hat den Vorteil, dass bei z.B. einem schadhaften Schlauch 10 das Schlauchaufnahmestück 44 abgeschraubt, der Schlauch 10 unter Entfernung des defekten Schlauchbereichs neu abgelängt und sodann problemlos durch Wiederaufschrauben des Schlauchaufnahmestücks 44 neu fertigkonfektioniert werden kann. Bei dieser Art der Befestigung ist der elektrisch leitfähige Faden 30 zwischen der Profilierung 20 und dem Innengewindeabschnitt 48 unter Ausbildung eines elektrischen Kontakts geklemmt. Dies ist beispielhaft in Fig. 4 links dargestellt, wo ein über das Klebeband 40 vorstehendes Ende 49 des elektrisch leitfähigen Fadens 30 eine derartige Klemmung erfährt.

Bei dem in den Fig. 1 und 2 rechten Schlauchaufnahmestück 46 des Schlauchs 10 hingegen ist das Ende 34 des Schlauchs 10 in einem zugeordneten, hier im Wesentlichen hohlzylindrischen Aufnahmeabschnitt 50 des ringförmigen Schlauchaufnahmestücks 46 eingesteckt und mit dem Schlauchaufnahmestück 46 mittels eines elektrisch leitfähigen Klebstoffs 52 verklebt. Wie in Fig. 5 rechts mit einer gestrichelten Linie angedeutet ist, verläuft der elektrisch leitfähige Faden 30 mit einem über das Klebeband 40 vorstehenden Ende 53 unter Ausbildung eines elektrischen Kontakts in den elektrisch leitfähigen Klebstoff 52 hinein.

Ein Verfahren zur Herstellung des insoweit beschriebenen flexiblen Schlauchs 10 umfasst allgemein die folgenden drei Verfahrensschritte a) bis c): In einem ersten Schritt a) erfolgt das Ausbilden eines Grundschlauchs, der die Wand 12 umfasst, die mit ihrer Innenseite 14 um die Längsachse 22 den Hohlraum 16 begrenzt und wenigstens an ihrer Außenseite 18 die Profilierung 20 aufweist, die im Schnitt gesehen die Wellenform mit Erhebungen 24 und Vertiefungen 26 besitzt, wobei die Wand 12 insgesamt aus einem elektrisch leitfähigen Material oder zumindest die elektrisch leitfähige Bahn 28 an der Außenseite 18 der Wand 12 ausgebildet wird, so dass die elektrisch leitfähige Bahn 28 um die Wand 12 herum verläuft. Der insoweit hergestellte Grundschlauch ist prinzipiell schon einsatzfähig, d.h. werden an ihn keine besonderen Anforderungen im Hinblick auf die Ableitfähigkeit von elektrostatischen Ladungen gestellt, so kann dieser Grundschlauch schon durch Ablängen und Versehen mit geeigneten Endstücken konfektioniert werden.

Erst in einem Folgeschritt b) erfolgt nun bei höheren Anforderungen an den Schlauch 10 hinsichtlich der Ableitfähigkeit von elektrostatischen Ladungen das Aufbringen des wenigstens einen elektrisch leitfähigen Fadens 30 an der Außenseite 18 der Wand 12, so dass der elektrisch leitfähige Faden 30 im Wesentlichen entlang der Längsachse 22 und quer zur elektrisch leitfähigen Bahn 28 verläuft. Mit anderen Worten gesagt wird in diesem Schritt die umlaufende elektrisch leitfähige Bahn 28 vermittels des elektrisch leitfähigen Fadens 30 kurzgeschlossen oder zumindest hierfür vorbereitet.

Um schließlich diesen elektrischen Zustand bei der weiteren Verarbeitung und im späteren Einsatz des Schlauchs 10 aufrechtzuerhalten bzw. hierfür herbeizuführen, erfolgt in einem weiteren Schritt c) das Befestigen des wenigstens einen elektrisch leitfähigen Fadens 30 an der Außenseite 18 der Wand 12, so dass der elektrisch leitfähige Faden 30 die elektrisch leitfähige Bahn 28 - dauerhaft - elektrisch kontaktiert. Dieses Befestigen kann, wie oben schon erwähnt, durch An- bzw. Aufbringen des Klebebands 40 und/oder der Umflechtung 42 an der Außenseite 18 der Wand 12 des Schlauchs 10 erfolgen.

Bevorzugte Unterschritte des Schritts a) des Ausbildens des Grundschlauchs umfassen, wie oben ebenfalls bereits angesprochen, zunächst einen Unterschritt, bei dem das Profil 36 aus einem elektrisch leitfähigen Kunststoffmaterial extrudiert oder aus zwei Kunststoffmaterialien unterschiedlicher elektrischer Leitfähigkeit koextrudiert wird, so dass das Profil 36 zumindest die elektrisch leitfähige Bahn 28 aufweist, wenn nicht gar vollständig elektrisch leitfähig ist. Hierauf wird in einem weiteren Unterschritt das Profil 36 zur Ausbildung der Wand 12 des Grundschlauchs schraubenförmig gewickelt, wobei benachbarte Windungen des Profils 36 z.B. mittels des Schmelzklebers 38 mediendicht miteinander verbunden werden, wie es an sich bekannt ist.

Im Hinblick auf eine schnelle und effiziente Massenfertigung von Schläuchen 10 ist es besonders bevorzugt, wenn die Schritte b) des Aufbringens und c) des Befestigens des elektrisch leitfähigen Fadens 30 an der Außenseite 18 der Wand 12 zur gleichen Zeit durchgeführt werden. Weiter unten wird noch eine Vorrichtung beschrieben, die hierfür zum Einsatz kommen kann.

Nach dem Schritt c) des Befestigens des elektrisch leitfähigen Fadens 30 an der Außenseite 18 der Wand 12 kann schließlich an einem oder beiden der voneinander abgewandten Enden 32, 34 des wie gewünscht oder benötigt abgelängten Schlauchs 10 z.B. das vorbeschriebene Schlauchaufnahmestück 44, 46 aus einem elektrisch leitfähigen Material angebracht werden, das den elektrisch leitfähigen Faden 30 elektrisch kontaktiert.

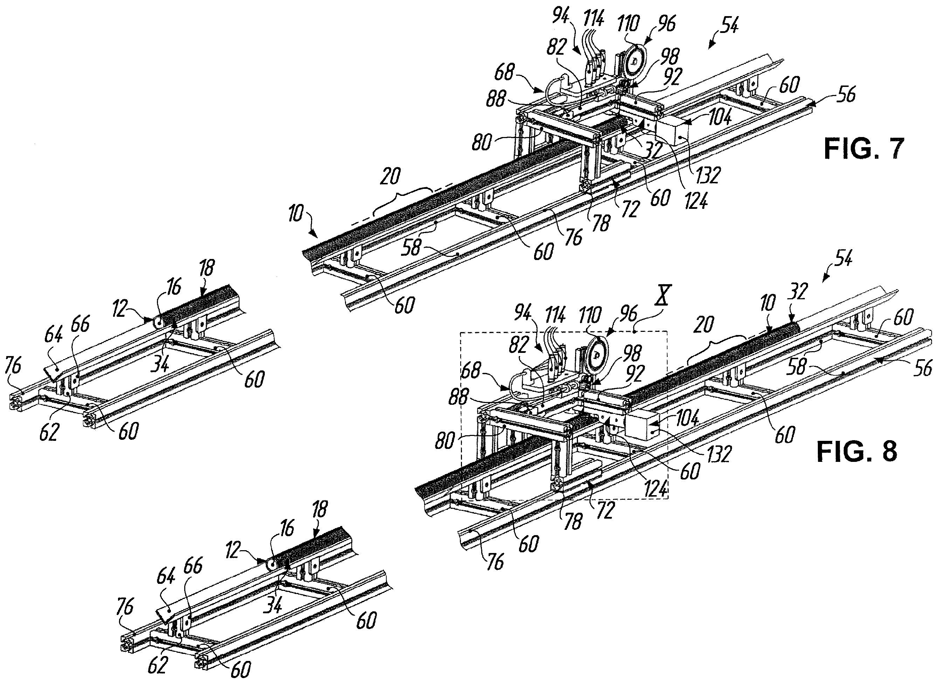

Den Fig. 7 bis 14 sind Details einer Vorrichtung 54 zum Aufbringen eines elektrisch leitfähigen Fadens 30 (oder mehrerer elektrisch leitfähiger Fäden 30) an der Außenseite 18 z.B. des vorbeschriebenen flexiblen Schlauchs 10 zu entnehmen. Die Vorrichtung 54 hat ein im dargestellten Ausführungsbeispiel aus Aluminiumprofilen zusammengesetztes Gestell 56, an dem die einzelnen Komponenten bzw. Baugruppen der Vorrichtung 54 angeordnet sind. Wie insbesondere die Fig. 7 bis 9 zeigen, ist das Gestell 56 in der Art eines Leiterrahmens ausgebildet, mit zwei Längsprofilen 58, die mittels einer Mehrzahl von Querprofilen 60 fest miteinander verbunden sind.

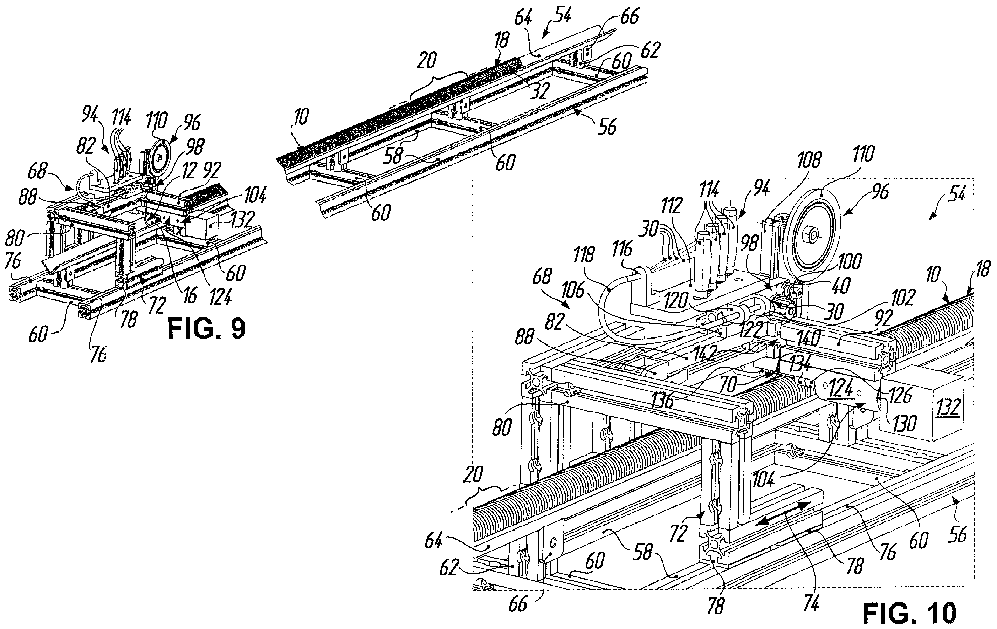

An den Querprofilen 60 des Gestells 56 ist - siehe insbesondere die Fig. 7 und 8 auf der linken Seite bzw. die Fig. 9 auf der rechten Seite - über Halteprofile 62 eine Schlauchauflage 64 aufgeständert, die aus einem länglichen Winkelprofil mit einem V-förmigen Querschnitt besteht, das über Befestigungslaschen 66 an den Halteprofilen 62 befestigt ist. Wie die Fig. 7 bis 13 zeigen, dient die Schlauchauflage 64 der Aufnahme des mit dem elektrisch leitfähigen Faden 30 zu bestückenden Schlauchs 10, der sich in der Schlauchauflage 64 aufgrund der V-Form der Schlauchauflage 64 selbsttätig in eine stabile, untere Endlage bewegt.

Zentraler Bestandteil der Vorrichtung 54 ist ein Applikator 68 für den elektrisch leitfähigen Faden 30, der - wie nachfolgend noch näher beschrieben wird - ein drehbares, stock- oder zellenradähnliches Applikatorrad 70 hat (siehe die Fig. 10 und 12 bis 14), an dessen Außenumfang der elektrisch leitfähige Faden 30 zugeführt wird und das angepasst ist, mit der Profilierung 20 des in der Schlauchauflage 64 eingelegten Schlauchs in einen formschlüssigen Eingriff zu gelangen. Im Ergebnis erfolgt bei drehendem Applikatorrad 70 eine relative Vorschubbewegung zwischen Schlauch 10 und Applikator 68, bei der das Applikatorrad 70 den elektrisch leitfähigen Faden 30 entlang der Längsachse 22 des Schlauchs 10 den Erhebungen 24 und Vertiefungen 26 folgend an der Profilierung 20 des Schlauchs 10 aufbringt.

Im dargestellten Ausführungsbeispiel ist die Anordnung so getroffen, dass die Schlauchauflage 64 ortsfest am Gestell 56 angebracht ist, während der Applikator 68 einen Applikatorschlitten 72 aufweist, der das Applikatorrad 70 auf noch zu beschreibende Weise trägt und - wie in einem Vergleich der Fig. 7 bis 9 deutlich zu sehen ist - an dem Gestell 56 entlang der Schlauchauflage 64 verschiebbar geführt ist (vgl. auch den Doppelpfeil 74 für die Längsbewegung in den Fig. 10, 11 und 14). Hierfür sind die Längsprofile 58 des Gestells 56 an ihrer Oberseite mit jeweils einer durchgehenden Führungsnut 76 versehen, in der auf jeder Seite des Gestells 56 ein Paar von Profilgleitern 78 gleitfähig eingreift, die ihrerseits fest mit dem Applikatorschlitten 72 verbunden sind. Der Applikatorschlitten 72 selbst ist im dargestellten Ausführungsbeispiel gemäß insbesondere den Fig. 10 bis 14 wiederum aus einer Mehrzahl von Aluminiumprofilabschnitten zusammengesetzt, von denen sich ein Profilabschnitt als Quertraverse 80 über der Schlauchauflage 64 erstreckt.

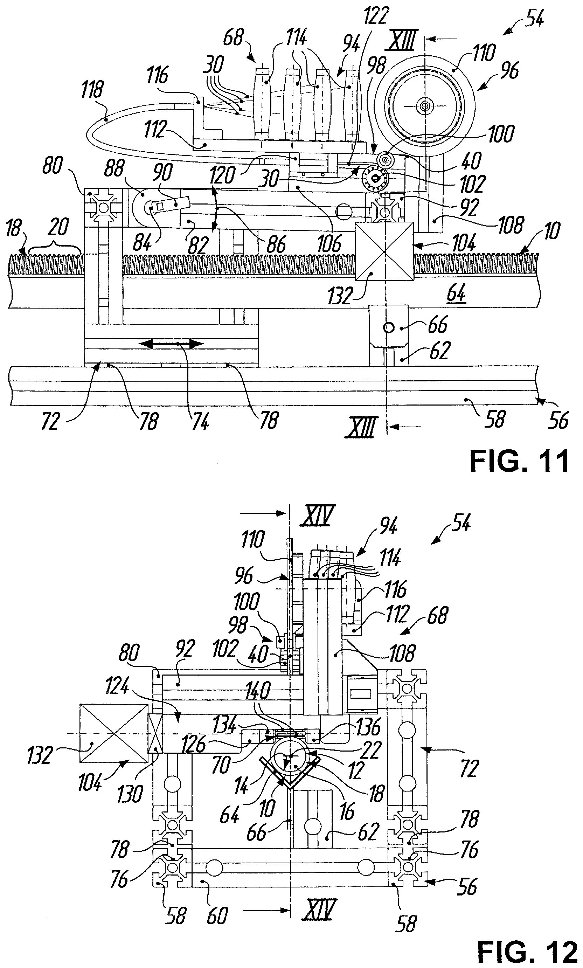

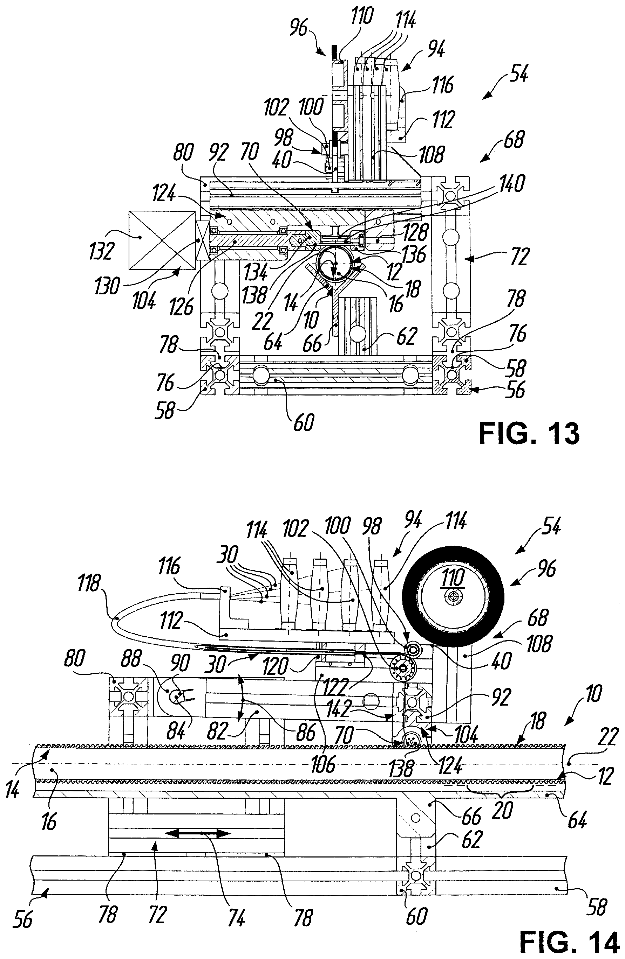

Der Applikator 68 weist ferner einen Applikatorarm 82 auf, an dem das Applikatorrad 70 auf noch zu beschreibende Weise drehbar gelagert ist und der bezüglich der Schlauchauflage 64 um eine wahlweise feststellbare Schwenkachse 84 verschwenkbar ist, die am besten in den Fig. 11 und 14 zu erkennen ist (vgl. auch den Doppelpfeil 86 für die Schwenkbewegung in diesen Figuren). Hierfür ist der Applikatorarm 82 unter Zuhilfenahme eines Gelenks 88 mit einem Klemmhebel 90 an der Quertraverse 80 des Applikatorschlittens 72 angelenkt. Ist der Klemmhebel 90 festgestellt, so ist der Applikatorarm 82 in seiner jeweiligen Winkellage um die Schwenkachse 84 fixiert. Bei gelöstem Klemmhebel 90 hingegen kann der Applikatorarm 82 um die Schwenkachse 84 verschwenken.

Gemäß Fig. 14 befinden sich die Schwenkachse 84 und das Applikatorrad 70 an voneinander abgewandten Enden des Applikatorarms 82. Wie ferner insbesondere in den Fig. 10 und 14 zu sehen ist, ist der Applikatorarm 82 mit dem Applikatorrad 70 und seiner Schwenkachse 84 so bezüglich der Schlauchauflage 64 angeordnet, dass um die Schwenkachse 84 ein Drehmoment in Richtung der Schlauchauflage 64 resultiert, und zwar aufgrund des Eigengewichts des Applikatorarms 82 und der daran montierten Komponenten bzw. Baugruppen. Infolge dieses Drehmoments wird das Applikatorrad 70 gegen einen in bzw. an der Schlauchauflage 64 platzierten Schlauch 10 gedrückt und mit dessen Profilierung 20 in Eingriff gehalten.

Ggf. kann der Applikatorarm 82 auch händisch in Richtung des Schlauchs 10 gedrückt und dann durch Feststellen des Klemmhebels 90 in dieser Andrückposition fixiert werden. In einer in den Figuren nicht dargestellten Variante kann der Applikatorarm 82 darüber hinaus auch um seine Schwenkachse 84 in Richtung der Schlauchauflage 64 federnd vorgespannt sein, z.B. mittels einer Zugfeder, die betätigungswirksam zwischen dem Applikatorarm 82 und einem unteren Teil des Applikatorschlittens 72 angeordnet ist.

Für den Fachmann ist ersichtlich, dass mit diesen Maßnahmen das Applikatorrad 70 zuverlässig in Eingriff mit der Profilierung 20 eines auf der Schlauchauflage 64 aufliegenden Schlauchs 10 gehalten werden kann. Dabei können Schläuche 10 mit unterschiedlichen Durchmessern und Formen (z.B. im Wesentlichen zylindrisch oder konisch) verarbeitet, d.h. mit einem elektrisch leitfähigen Faden 30 versehen werden.

Wie des Weiteren am besten den Fig. 10, 11 und 14 zu entnehmen ist, besitzt der Applikatorarm 82 ein Kopfteil 92 aus einem Aluminiumprofilabschnitt, an dem weitere Komponenten bzw. Baugruppen des Applikators 68 montiert sind, wie im Folgenden beschrieben wird. Bei diesen Komponenten und Baugruppen handelt es sich im Einzelnen um eine Zuführeinrichtung 94 für den elektrisch leitfähigen Faden 30, eine Zuführeinrichtung 96 für das Klebeband 40, eine Führungsrollenanordnung 98 mit einem Paar von Führungsrollen 100, 102 zum Vereinigen des elektrisch leitfähigen Fadens 30 mit dem Klebeband 40, bevor eine Weiterleitung an das Applikatorrad 70 erfolgt, sowie eine Lager- und Antriebsanordnung 104 für das Applikatorrad 70.

Gemäß den Fig. 10, 11 und 14 ist zunächst die Führungsrollenanordnung 98 mittels eines Lagerprofilabschnitts 106 oben an dem Kopfteil 92 des Applikatorarms 82 angebracht, so dass sich die Führungsrollen 100, 102 oberhalb des Applikatorrads 70 in einer bezüglich des Applikatorrads 70 ausgefluchteten Position befinden, wie deutlich in den Fig. 12 und 13 zu sehen ist. Die Führungsrollen 100, 102 sind hierbei am Lagerprofilabschnitt 106 auf geeignete Weise fliegend drehbar gelagert.

Auf der von der Schwenkachse 84 abgewandten Seite des Kopfteils 92 und des Lagerprofilabschnitts 106 ist ferner ein Rollenhalter 108 der Zuführeinrichtung 96 montiert, an dessen freien Ende eine Klebebandrolle 110 drehbar gelagert ist, und zwar ebenfalls fliegend. Gemäß insbesondere den Fig. 12 und 13 befindet sich die mit ihrer Drehachse oberhalb der Führungsrollenanordnung 98 angeordnete Klebebandrolle 110 ebenfalls in Flucht mit den Führungsrollen 100, 102.

Oben an dem Lagerprofilabschnitt 106 ist darüber hinaus ein Spulenhalter 112 der Zuführeinrichtung 94 montiert, der im dargestellten Ausführungsbeispiel vier auf parallele Achsstifte (nicht dargestellt) drehbar aufgesteckte Spulen 114 mit elektrisch leitfähigen Fäden 30 trägt. An dem von der Klebebandrolle 110 abgewandten Ende des Spulenhalters 112 ist ein Befestigungswinkel 116 für ein Ende eines Schlauchs 118 angebracht, dessen anderes Ende mittels einer Konsole 120 seitlich an dem Lagerprofilabschnitt 106 befestigt ist. Diese Konsole 120 hält schließlich auch ein Röhrchen 122 für die Zufuhr, genauer gesagt das Führen der elektrisch leitfähigen Fäden 30 zu der Führungsrollenanordnung 98.

Insoweit ist ersichtlich, dass das Klebeband 40 von der Klebebandrolle 110 der Zuführeinrichtung 96 abgerollt und der Führungsrollenanordnung 98 zugeführt werden kann. Zugleich können elektrisch leitfähigen Fäden 30 von den Spulen 114 abgespult, über den Schlauch 118 gesammelt und durch das Röhrchen 122 geführt der Führungsrollenanordnung 98 zugeführt werden, wo die elektrisch leitfähigen Fäden 30 mit dem Klebeband 40 vereinigt werden.

Unterhalb des Kopfteils 92 des Applikatorarms 82 ist des Weiteren ein Lagerbock 124 der Lager- und Antriebsanordnung 104 für das Applikatorrad 70 angebracht. Im dargestellten Ausführungsbeispiel ist der Lagerbock 124 zweiteilig ausgebildet, mit einem in Fig. 13 linken Teil, in dem eine Antriebswelle 126 für das Applikatorrad 70 über zwei Wälzlager drehbar gelagert ist, und einem in Fig. 13 rechten Teil, an dem ein Achsstift 128 zum Lagern des Applikatorrads 70 vermittels eines radseitigen Wälzlagers montiert ist. Auf der in den Fig. 12 und 13 linken Seite des Lagerbocks 124 ist ferner über einen Montageflansch 130 ein vorzugsweise elektrischer Drehantrieb 132 angeflanscht, der über die Antriebswelle 126 mit dem Applikatorrad 70 in Antriebsverbindung steht.

Weitere Details zum Applikatorrad 70 sind schließlich den Fig. 10 und 12 bis 14 zu entnehmen. Demgemäß weist das Applikatorrad 70 zwischen zwei Nabenabschnitten 134, 136 eine Mehrzahl von - im dargestellten Ausführungsbeispiel fünf (siehe Fig. 14) - gleichmäßig über dem Umfang verteilten Achsstiften 138 auf. Die Achsstifte 138 lagern jeweils eine hohlzylindrische Hülse 140 als Andrückkörper für den elektrisch leitfähigen Faden 30 in drehbarer Weise. Der Fig. 13 ist auch zu entnehmen, dass der in dieser Figur linke Nabenabschnitt 134 des Applikatorrads 70 in der Art einer Kupplung mit der Antriebswelle 126 drehfest verbunden ist, während der in dieser Figur rechte Nabenabschnitt 136 des Applikatorrads 70 das Wälzlager aufnimmt, welches mit dem Achsstift 128 im Lagerbock 124 das Applikatorrad 70 drehbar lagernd zusammenwirkt.

Wie insbesondere die Fig. 10 und 14 zeigen, ist das mit den elektrisch leitfähigen Fäden 30 vereinigte Klebeband 40 ausgehend von der Führungsrollenanordnung 98 durch eine schlitzartige Ausnehmung 142 im Kopfteil 92 des Applikatorarms 82 und in dem daran montierten Lagerbock 124 zu dem Applikatorrad 70 geführt, über das die elektrisch leitfähigen Fäden 30 unter dem Klebeband 40 auf der Außenseite 18 des Schlauchs 10 aufgebracht und befestigt werden. Dabei rollt das Applikatorrad 70, dessen Hülsen 140 mit der Profilierung 20 des Schlauchs 10 formschlüssig eingreifen, auf dem Schlauch 10 ab.

Es ist ersichtlich, dass durch Antreiben des Applikatorrads 70 vermittels des Drehantriebs 132 somit nicht nur das elektrisch kontaktierende Aufbringen und Befestigen der elektrisch leitfähigen Fäden 30 am Schlauch 10 erfolgt, sondern auch die Vorschubbewegung zwischen dem Applikator 68 und dem auf der Schlauchauflage 64 liegenden Schlauch 10 erzeugt wird, bei der sich der Applikatorschlitten 72 wie in den Fig. 7 bis 9 gezeigt über der am Gestell 56 fixen Schlauchauflage 64 hinweg bewegt. Am Ende kann der Schlauch 10, dessen elektrisch leitfähige Bahn 28 über die aufgebrachten elektrisch leitfähigen Fäden 30 durchkontaktiert bzw. kurzgeschlossen ist, aus der Schlauchauflage 64 von der Vorrichtung 54 entnommen werden, bevor durch eventuelles weiteres Ablängen des Schlauchs 10 und Anbringen der Schlauchaufnahmestücke 44, 46 die weitere Konfektionierung des Schlauchs 10 erfolgt.

Ein flexibler Schlauch, insbesondere Staubsaugerschlauch, hat eine Wand, die mit einer Innenseite einen Hohlraum zum Fördern von Medien begrenzt und wenigstens an einer Außenseite eine Profilierung aufweist, die im Schnitt entlang einer Längsachse des Schlauchs gesehen Erhebungen und Vertiefungen besitzt. An der Außenseite der Wand ist zumindest eine elektrisch leitfähige Bahn vorgesehen, die um die Wand herum verläuft und in einem elektrischen Kontakt mit wenigstens einem elektrisch leitfähigen Faden steht, der voneinander abgewandte Enden des Schlauchs elektrisch verbindet. Der elektrisch leitfähige Faden ist im Wesentlichen entlang der Längsachse des Schlauchs und quer zur elektrisch leitfähigen Bahn verlaufend an der Außenseite der Wand befestigt, wodurch der Schlauch bei Einsatz einer im Verhältnis geringen Menge an elektrisch leitfähigen Materialien eine verbesserte Eignung zum Recycling besitzt. Ferner werden ein Verfahren zur Herstellung eines solchen Schlauchs und eine hierfür einsetzbare Vorrichtung vorgeschlagen.

### BEZUGSZEICHENLISTE

- 10: Schlauch
- 12: Wand
- 14: Innenseite
- 16: Hohlraum
- 18: Außenseite
- 20: Profilierung
- 22: Längsachse
- 24: Erhebung
- 26: Vertiefung
- 28: elektrisch leitfähige Bahn
- 30: elektrisch leitfähiger Faden
- 32: Ende
- 34: Ende
- 36: Profil
- 38: Schmelzkleber
- 40: Klebeband
- 42: Umflechtung
- 44: Schlauchaufnahmestück
- 46: Schlauchaufnahmestück
- 48: Innengewindeabschnitt
- 49: Ende
- 50: Aufnahmeabschnitt
- 52: elektrisch leitfähiger Klebstoff
- 53: Ende
- 54: Vorrichtung
- 56: Gestell
- 58: Längsprofil
- 60: Querprofil
- 62: Halteprofil
- 64: Schlauchauflage
- 66: Befestigungslasche
- 68: Applikator
- 70: Applikatorrad
- 72: Applikatorschlitten
- 74: Doppelpfeil (Axialbewegung)
- 76: Führungsnut
- 78: Profilgleiter
- 80: Quertraverse
- 82: Applikatorarm
- 84: Schwenkachse
- 86: Doppelpfeil (Schwenkbewegung)
- 88: Gelenk
- 90: Klemmhebel
- 92: Kopfteil
- 94: Zuführeinrichtung
- 96: Zuführeinrichtung
- 98: Führungsrollenanordnung
- 100: Führungsrolle
- 102: Führungsrolle
- 104: Lager- und Antriebsanordnung
- 106: Lagerprofilabschnitt
- 108: Rollenhalter
- 110: Klebebandrolle
- 112: Spulenhalter
- 114: Spule
- 116: Befestigungswinkel
- 118: Schlauch
- 120: Konsole
- 122: Röhrchen
- 124: Lagerbock
- 126: Antriebswelle
- 128: Achsstift
- 130: Montageflansch
- 132: Drehantrieb
- 134: Nabenabschnitt
- 136: Nabenabschnitt
- 138: Achsstift
- 140: Hülse
- 142: schlitzartige Ausnehmung

## Patentansprüche

1. Flexibler Schlauch (10), insbesondere Staubsaugerschlauch, mit einer Wand (12), die mit einer Innenseite (14) einen Hohlraum (16) zum Fördern von Medien begrenzt und wenigstens an einer Außenseite (18) eine Profilierung (20) aufweist, die im Schnitt entlang einer Längsachse (22) des Schlauchs (10) gesehen eine Wellenform mit Erhebungen (24) und Vertiefungen (26) besitzt, wobei an der Außenseite (18) der Wand (12) zumindest eine elektrisch leitfähige Bahn (28) vorgesehen ist, die um die Wand (12) herum verläuft und in einem elektrischen Kontakt mit wenigstens einem elektrisch leitfähigen Faden (30) steht, der voneinander abgewandte Enden (32, 34) des Schlauchs (10) elektrisch verbindet, **dadurch gekennzeichnet, dass** der elektrisch leitfähige Faden (30) im Wesentlichen entlang der Längsachse (22) des Schlauchs (10) und quer zur elektrisch leitfähigen Bahn (28) verlaufend an der Außenseite (18) der Wand (12) befestigt ist.

2. Flexibler Schlauch (10) nach Anspruch 1, **dadurch gekennzeichnet, dass** der elektrisch leitfähige Faden (30) mittels eines Klebebands (40) an der Außenseite (18) der Wand (12) befestigt ist.

3. Flexibler Schlauch (10) nach Anspruch 2, **dadurch gekennzeichnet, dass** das Klebeband (40) den elektrisch leitfähigen Faden (30) in Umfangsrichtung des Schlauchs (10) gesehen zu beiden Seiten überdeckt.

4. Flexibler Schlauch (10) nach einem der vorhergehenden Ansprüche, **dadurch gekennzeichnet,**
**dass** der elektrisch leitfähige Faden oder das den elektrisch leitfähigen Faden (30) überdeckende Klebeband (40) an der Außenseite (18) der Wand (12) von einer Umflechtung (42) des Schlauchs (10) umgeben ist und/oder
**dass** die elektrisch leitfähige Bahn (28) auf der Außenseite (18) der Wand (12) nahe oder an den Erhebungen (24) der Profilierung (20) ausgebildet ist und/oder
**dass** der Schlauch (10) an einem oder beiden der voneinander abgewandten Enden (32, 34) mit einem Schlauchaufnahmestück (44, 46) aus einem elektrisch leitfähigen Material versehen ist.

5. Flexibler Schlauch (10) nach Anspruch 4, **dadurch gekennzeichnet,**
**dass** die außenseitige Profilierung (20) des Schlauchs (10) schraubenförmig ist und das Ende (32) des Schlauchs (10) mit der schraubenförmigen Profilierung (20) in einem zugeordneten Innengewindeabschnitt (48) des Schlauchaufnahmestücks (44) eingeschraubt ist, wobei der elektrisch leitfähige Faden (30) zwischen der Profilierung (20) und dem Innengewindeabschnitt (48) unter Ausbildung eines elektrischen Kontakts geklemmt ist, und/oder
**dass** das Ende (34) des Schlauchs (10) in einem zugeordneten Aufnahmeabschnitt (50) des Schlauchaufnahmestücks (46) eingesteckt und mit dem Schlauchaufnahmestück (46) mittels eines elektrisch leitfähigen Klebstoffs (52) verklebt ist, in den der elektrisch leitfähige Faden (30) unter Ausbildung eines elektrischen Kontakts hinein verläuft.

6. Flexibler Schlauch (10) nach einem der vorhergehenden Ansprüche, **dadurch gekennzeichnet, dass** die Wand (12) des Schlauchs (10) aus einem schraubenförmig gewickelten Profil (36) gebildet ist, wobei benachbarte Windungen des Profils (36) mediendicht miteinander verbunden sind.

7. Flexibler Schlauch (10) nach Anspruch 6, **dadurch gekennzeichnet, dass** die benachbarten Windungen des Profils (36) mittels eines Schmelzklebers (38) mediendicht miteinander verbunden sind.

8. Verfahren zur Herstellung eines flexiblen Schlauchs (10) nach einem der vorhergehenden Ansprüche, **gekennzeichnet durch** die folgenden Verfahrensschritte:
a) Ausbilden eines Grundschlauchs, der eine Wand (12) hat, die mit einer Innenseite (14) um eine Längsachse (22) einen Hohlraum (16) begrenzt und wenigstens an einer Außenseite (18) eine Profilierung (20) aufweist, die im Schnitt gesehen eine Wellenform mit Erhebungen (24) und Vertiefungen (26) besitzt, wobei die Wand (12) aus einem elektrisch leitfähigen Material oder zumindest eine elektrisch leitfähige Bahn (28) an der Außenseite (18) der Wand (12) ausgebildet wird, so dass die elektrisch leitfähige Bahn (28) um die Wand (12) herum verläuft,
b) Aufbringen wenigstens eines elektrisch leitfähigen Fadens (30) an der Außenseite (18) der Wand (12), so dass der elektrisch leitfähige Faden (30) im Wesentlichen entlang der Längsachse (22) und quer zur elektrisch leitfähigen Bahn (28) verläuft, und
c) Befestigen des elektrisch leitfähigen Fadens (30) an der Außenseite (18) der Wand (12), so dass der elektrisch leitfähige Faden (30) die elektrisch leitfähige Bahn (28) elektrisch kontaktiert.

9. Verfahren zur Herstellung eines flexiblen Schlauchs (10) nach Anspruch 8, **dadurch gekennzeichnet, dass** im Schritt a) des Ausbildens des Grundschlauchs zunächst ein Profil (36) aus einem elektrisch leitfähigen Kunststoffmaterial extrudiert oder aus zwei Kunststoffmaterialien unterschiedlicher elektrischer Leitfähigkeit koextrudiert wird, so dass das Profil (36) zumindest eine elektrisch leitfähige Bahn (28) umfasst, worauf das Profil (36) zur Ausbildung der Wand (12) des Grundschlauchs schraubenförmig gewickelt wird, wobei benachbarte Windungen des Profils (36) mediendicht miteinander verbunden werden.

10. Verfahren zur Herstellung eines flexiblen Schlauchs (10) nach Anspruch 9, **dadurch gekennzeichnet, dass** die benachbarten Windungen des Profils (36) mittels eines Schmelzklebers (38) mediendicht miteinander verbunden werden.

11. Verfahren zur Herstellung eines flexiblen Schlauchs (10) nach einem der Ansprüche 8 bis 10, **dadurch gekennzeichnet,**
**dass** die Schritte b) des Aufbringens und c) des Befestigens des elektrisch leitfähigen Fadens (30) an der Außenseite (18) der Wand (12) zugleich durchgeführt werden und/oder
**dass** nach dem Schritt c) des Befestigens des elektrisch leitfähigen Fadens (30) an der Außenseite (18) der Wand (12) an einem oder beiden der voneinander abgewandten Enden (32, 34) des abgelängten Schlauchs (10) ein Schlauchaufnahmestück (44, 46) aus einem elektrisch leitfähigen Material angebracht wird, das den elektrisch leitfähigen Faden (30) elektrisch kontaktiert.

12. Vorrichtung (54) zum Aufbringen eines elektrisch leitfähigen Fadens (30) an einer Außenseite (18) eines flexiblen Schlauchs (10) nach einem der Ansprüche 1 bis 7, wobei die Außenseite (18) des Schlauchs (10) eine Profilierung (20) aufweist, die im Schnitt entlang einer Längsachse (22) des Schlauchs (10) gesehen eine Wellenform mit Erhebungen (24) und Vertiefungen (26) besitzt, **gekennzeichnet durch** einen Applikator (68) für den elektrisch leitfähigen Faden (30), der ein drehbares, stock- oder zellenradähnliches Applikatorrad (70) hat, an dessen Außenumfang der elektrisch leitfähige Faden (30) zuführbar ist und das angepasst ist, mit der Profilierung (20) des in einer Schlauchauflage (64) einlegbaren Schlauchs (10) in einen formschlüssigen Eingriff zu gelangen, so dass bei drehendem Applikatorrad (70) eine relative Vorschubbewegung zwischen Schlauch (10) und Applikator (68) erfolgt, bei der das Applikatorrad (70) den elektrisch leitfähigen Faden (30) entlang der Längsachse (22) des Schlauchs (10) den Erhebungen (24) und Vertiefungen (26) folgend an der Profilierung (20) des Schlauchs (10) aufbringt.

13. Vorrichtung (54) nach Anspruch 12, **dadurch gekennzeichnet, dass** der Applikator (68) einen Applikatorarm (82) aufweist, an dem das Applikatorrad (70) drehbar gelagert ist und der bezüglich der Schlauchauflage (64) um eine wahlweise feststellbare Schwenkachse (84) verschwenkbar ist.

14. Vorrichtung (54) nach Anspruch 13, **dadurch gekennzeichnet, dass** der Applikatorarm (82) mit dem Applikatorrad (70) und seiner Schwenkachse (84) so bezüglich der Schlauchauflage (64) angeordnet ist, dass um die Schwenkachse (84) ein Drehmoment in Richtung der Schlauchauflage (64) resultiert, und/oder dass der Applikatorarm (82) um seine Schwenkachse (84) in Richtung der Schlauchauflage (64) federnd vorgespannt ist.

15. Vorrichtung (54) nach einem der Ansprüche 12 bis 14, **dadurch gekennzeichnet,**
**dass** die Vorrichtung (54) ein Gestell (56) umfasst, an dem die Schlauchauflage (64) ortsfest angebracht ist, wobei der Applikator (68) einen Applikatorschlitten (72) aufweist, der das Applikatorrad (70) trägt und an dem Gestell (56) entlang der Schlauchauflage (64) verschiebbar geführt ist, und/oder
**dass** der Applikator (68) eine Zuführeinrichtung (94) für den elektrisch leitfähigen Faden (30) und eine Zuführeinrichtung (96) für ein Klebeband (40) aufweist, wobei der elektrisch leitfähige Faden (30) und das Klebeband (40) von den Zuführeinrichtungen (94, 96) einem Paar von Führungsrollen (100, 102) zuführbar sind, die angepasst sind, Faden (30) und Klebeband (40) zu vereinigen, bevor eine Weiterleitung an das Applikatorrad (70) erfolgt, und/oder
**dass** das Applikatorrad (70) zwischen zwei Nabenabschnitten (134, 136) eine Mehrzahl von gleichmäßig über dem Umfang verteilten Achsstiften (138) aufweist, die jeweils eine hohlzylindrische Hülse (140) als Andrückkörper für den elektrisch leitfähigen Faden (30) drehbar lagern, und/oder
**dass** das Applikatorrad (70) mit einem Drehantrieb (132) antriebsverbunden ist.

## Claims

1. Flexible hose (10), particularly vacuum cleaner hose, with a wall (12) which by an inner side (14) delimits a cavity (16) for the conveying of media and has at least at an outer side (18) a profiling (20) which as seen in section along a longitudinal axis (22) of the hose (10) has a wave shape with elevations (24) and depressions (26), wherein provided at the outer side (18) of the wall (12) is at least one electrically conductive track (28) which extends around the wall (12) and is in electrical contact with at least one electrically conductive thread (30) electrically connecting mutually remote ends (32, 34) of the hose (10), **characterized in that** the electrically conductive thread (30) extending substantially along the longitudinal axis (22) of the hose (10) and transversely to the electrically conductive track (28) is secured to the outer side (18) of the wall (12).

2. Flexible hose (10) according to claim 1, **characterized in that** the electrically conductive thread (30) is secured to the outer side (18) of the wall (12) by an adhesive strip (40).

3. Flexible hose (10) according to claim **2, characterized in that** the adhesive strip (40) covers the electrically conductive thread (30) to both sides as seen in circumferential direction of the hose (10).

4. Flexible hose (10) according to any one of the preceding claims, **characterized in**
**that** the electrically conductive thread or the adhesive strip (40) covering the electrically conductive thread (30) is surrounded at the outer side (18) of the wall (12) by a braiding (42) of the hose (10), and/or
**that** the electrically conductive track (28) on the outer side (18) of the wall (12) is formed near to or at the elevations (24) of the profiling (20), and/or
**that** the hose (10) is provided at one or both of the mutually remote ends (32, 34) with a hose mounting member (44, 46) of an electrically conductive material.

5. Flexible hose (10) according to claim 4, **characterized in**
**that** the profiling (20) of the hose (10) at the outer side is helical and the end (32) of the hose (10) is screwed by the helical profiling (20) into an associated internally threaded section (48) of the hose mounting member (44), wherein the electrically conductive thread (30) is clamped between the profiling (20) and the internally threaded section (48) with formation of an electrical contact, and/or
**that** the end (34) of the hose (10) is plugged into an associated receiving section (50) of the hose mounting member (46) and glued to the hose mounting member (46) by an electrically conductive adhesive (52), into which the electrically conductive thread (30) extends with formation of an electrical contact.

6. Flexible hose (10) according to any one of the preceding claims, **characterized in that** the wall (12) of the hose (10) is formed from a helically wound profile (36), wherein adjacent windings of the profile (36) are media-tightly connected together.

7. Flexible hose (10) according to claim 6, **characterized in that** the adjacent windings of the profile (36) are media-tightly connected together by a hot-melt adhesive (38).

8. Method of producing a flexible hose (10) according to any one of the preceding claims, **characterized by** the following method steps:
a) forming a basic hose having a wall (12) which by an inner side (14) delimits a cavity (16) about a longitudinal axis (22) and has at least at an outer side (18) a profiling (20) which as seen in section has a wave shape with elevations (24) and depressions (26), wherein the wall (12) is formed from an electrically conductive material or at least one electrically conductive track (28) is formed at the outer side (18) of the wall (12) so that the electrically conductive track (28) extends around the wall (12),
b) applying at least one electrically conductive thread (30) to the outer side (18) of the wall (12) so that the electrically conductive thread (30) extends substantially along the longitudinal axis (22) and transversely to the electrically conductive track (28) and
c) securing the electrically conductive thread (30) to the outer side (18) of the wall (12) so that the electrically conductive thread (30) electrically contacts the electrically conductive track (28).

9. Method of producing a flexible hose (10) according to claim 8, **characterized in that** in step a) of forming the basic hose initially a profile (36) is extruded from an electrically conductive plastics material or co-extruded from two plastics materials of different electrical conductivity so that the profile (36) comprises at least one electrically conductive track (28), whereupon the profile (36) is helically wound to form the wall (12) of the basic hose, wherein adjacent windings of the profile (36) are media-tightly connected together.

10. Method of producing a flexible hose (10) according to claim 9, **characterized in that** the adjacent windings of the profile (36) are media-tightly connected together by a hot-melt adhesive (38).

11. Method of producing a flexible hose (10) according to any one of claims 8 to 10, **characterized in**
**that** the steps b) of applying and c) of securing the electrically conductive thread (30) to the outer side (18) of the wall (12) are performed at the same time, and/or
**that** after the step c) of securing the electrically conductive thread (30) to the outer side (18) of the wall (12) a hose mounting member (44, 46) of an electrically conductive material, which electrically contacts the electrically conductive thread (30), is attached to one or both of the mutually remote ends (32, 34) of the hose (10) cut to length.

12. Device (54) for applying an electrically conductive thread (30) to an outer side (18) of a flexible hose (10) according to any one of claims 1 to 7, wherein the outer side (18) of the hose (10) has a profiling (20) which as seen in section along a longitudinal axis (22) of the hose (10) has a wave shape with elevations (24) and depressions (26), **characterized by** an applicator (68) for the electrically conductive thread (30), the applicator having a rotatable applicator wheel (70) which is similar to a stock wheel or cell wheel and at the outer circumference of which the electrically conductive thread (30) can be fed, the applicator wheel being adapted to enter into interlocking engagement with the profiling (20) of the hose (10) placeable in a hose support (64) so that when the applicator wheel (70) is rotating a relative advance movement between hose (10) and applicator (68) takes place, in which the applicator wheel (70) applies the electrically conductive thread (30) to the profiling (20) of the hose (10) along the longitudinal axis (22) of the hose (10) to follow the elevations (24) and depressions (26).

13. Device (54) according to claim 12, **characterized in that** the applicator (68) comprises an applicator arm (82) on which the applicator wheel (70) is rotatably mounted and which is pivotable with respect to the hose support (64) about a selectively fixable pivot axis (84).

14. Device (54) according to claim 13, **characterized in that** the applicator arm (82) together with the applicator wheel (70) and the pivot axis (84) thereof is so arranged with respect to the hose support (64) that a torque about the pivot axis (84) arises in the direction of the hose support (64) and/or that the applicator arm (82) is resiliently biased about its pivot axis (84) in the direction of the hose support (64).

15. Device (54) according to any one of claims 12 to 14, **characterized in**
**that** the device (54) comprises a frame (56) on which the hose support (64) is mounted in stationary position, wherein the applicator (68) comprises an applicator carriage (72) which carries the applicator wheel (70) and is guided at the frame (56) to be displaceable along the hose support (64), and/or
**that** the applicator (68) comprises a feed device (94) for the electrically conductive thread (30) and a feed device (96) for an adhesive strip (40), wherein the electrically conductive thread (30) and the adhesive strip (40) can be fed from the feed devices (94, 96) to a pair of guide rollers (100, 102) which are adapted to combine the thread (30) and adhesive strip (40) before being passed on to the applicator wheel (70), and/or
**that** the applicator wheel (70) has between two hub sections (134, 136) a plurality of axle pins (138) which are distributed uniformly over the circumference and which each rotatably mount a respective hollow-cylindrical sleeve (140) as pressing body for the electrically conductive thread (30), and/or
**that** the applicator wheel (70) is drivably connected with a rotary drive (132).

## Revendications

1. Tuyau flexible (10), plus particulièrement tuyau d'aspirateur, avec une paroi (12) qui délimite, avec une face interne (14), une cavité (16), pour le transport de fluides et qui présente, au moins sur une face externe (18), un profilage (20) qui possède, vu en coupe le long d'un axe longitudinal (22) du tuyau (10), une forme ondulée avec des bossages (24) et des creux (26), dans lequel, sur la face externe (18) de la paroi (12), est prévue au moins une piste électro-conductrice (28) qui s'étend autour de la paroi (12) et qui est en contact électrique avec au moins un fil électro-conducteur (30), qui relie électriquement des extrémités (32, 34), opposées entre elles, du tuyau (10), **caractérisé en ce que** le fil électro-conducteur (30) est fixé, de façon à s'étendre globalement le long de l'axe longitudinal (22) du tuyau (10) et transversalement par rapport à la piste électro-conductrice (28), sur la face externe (18) de la paroi (12).

2. Tuyau flexible (10) selon la revendication 1, **caractérisé en ce que** le fil électro-conducteur (30) est fixé au moyen d'un ruban adhésif (40) à la face externe (18) de la paroi (12).

3. Tuyau flexible (10) selon la revendication 2, **caractérisé en ce que** le ruban adhésif (40) recouvre le fil électro-conducteur (30) des deux côtés, vu dans la direction de la circonférence du tuyau (10).

4. Tuyau flexible (10) selon l'une des revendications précédentes, **caractérisé en ce que**
le fil électro-conducteur ou le ruban adhésif (40) recouvrant le fil électro-conducteur (30) est entouré, au niveau de la face externe (18) de la paroi (12), par un tressage (42) du tuyau (10) et/ou
la piste électro-conductrice (28) est réalisée, sur la faxe externe (18) de la paroi (12), près ou au niveau des bossages (24) du profilage (20) et/ou
le tuyau (10) est muni, au niveau d'une ou des deux extrémités (32, 34) opposées entre elles, d'une pièce de logement de tuyau (44, 46) en matériau électro-conducteur.

5. Tuyau flexible (10) selon la revendication 4, **caractérisé en ce que**
le profilage externe (20) du tuyau (10) est hélicoïdal et l'extrémité (32) du tuyau (10) avec le profilage hélicoïdal (20) est vissée dans une portion à filetage interne (48) correspondante de la pièce de logement de tuyau (44), dans lequel le fil électro-conducteur (30) est serré entre le profilage (20) et la portion à filetage interne (48), formant ainsi un contact électrique et/ou
l'extrémité (34) du tuyau (10) est enfichée dans une portion de logement (50) correspondante de la pièce de logement de tuyau (46) et est collée avec la pièce de logement de tuyau (46) au moyen d'un adhésif électro-conducteur (52), dans lequel s'étend un fil électro-conducteur (30), formant ainsi un contact électrique.

6. Tuyau flexible (10) selon l'une des revendications précédentes, **caractérisé en ce que** la paroi (12) du tuyau (10) est constituée d'un profilé (36) enroulé de manière hélicoïdale, dans lequel les spires adjacentes du profilé (36) sont reliées entre elles de manière étanche aux fluides.

7. Tuyau flexible (10) selon la revendication 6, **caractérisé en ce que** les spires adjacentes du profilé (36) sont reliées entre elles de manière étanche aux fluides au moyen d'un adhésif thermofusible (38).

8. Procédé de fabrication d'un tuyau flexible (10) selon l'une des revendications précédentes, **caractérisé par** les étapes suivantes :
a) formation d'une ébauche de tuyau qui présente une paroi (12) qui délimite, avec une face interne (14), autour d'un axe longitudinal (22), une cavité (16) et qui comprend, au moins sur une face externe (18), un profilage (20) qui présente, vu en coupe, une forme ondulée avec des bossages (24) et des creux (26), dans lequel la paroi (12) est constituée d'un matériau électro-conducteur ou au moins une piste électro-conductrice (28) est réalisée sur la face externe (18) de la paroi (12), de sorte que la piste électro-conductrice (28) s'étend autour de la paroi (12),
b) application d'au moins un fil électro-conducteur (30) sur la face externe (18) de la paroi (12), de sorte que le fil électro-conducteur (30) s'étend globalement le long de l'axe longitudinal (22) et transversalement par rapport à la piste électro-conductrice (28) et
c) fixation du fil électro-conducteur (30) sur la face externe (18) de la paroi (12), de sorte que le fil électro-conducteur (30) entre en contact électrique avec la piste électro-conductrice (28).

9. Procédé de fabrication d'un tuyau flexible (10) selon la revendication 8, **caractérisé en ce que**, à l'étape a) de la formation de l'ébauche de tuyau, un profilé (36) est d'abord extrudé à partir d'une matière plastique électro-conductrice ou est co-extrudé à partir de deux matières plastiques de conductivités différentes, de sorte que le profilé (36) comprend au moins une piste électro-conductrice (28), le profilé (36) étant ensuite enroulé de manière hélicoïdale afin de former la paroi (12) de l'ébauche de tuyau, dans lequel les spires adjacentes du profilé (36) sont reliées entre elles de manière étanche aux fluides.

10. Procédé de fabrication d'un tuyau flexible (10) selon la revendication 9, **caractérisé en ce que** les spires adjacentes du profilé (36) sont reliées entre elles de manière étanche aux fluides au moyen d'un adhésif thermofusible (38).

11. Procédé de fabrication d'un tuyau flexible (10) selon l'une des revendications 8 à 10, **caractérisé en ce que**
les étapes b) de l'application et c) de la fixation du fil électro-conducteur (30) à la face externe (18) de la paroi (12) sont exécutées en même temps et/ou
après l'étape c) de fixation du fil électro-conducteur (30) à la face externe (18) de la paroi (12), au niveau d'une ou des deux extrémités (32, 34), opposées entre elles, du tuyau (10) coupé à longueur, est montée une pièce de logement de tuyau (44, 46), constituée d'un matériau électro-conducteur, qui entre en contact électrique avec le fil électro-conducteur (30).

12. Dispositif (54) d'application d'un fil électro-conducteur (30) sur une face externe (18) d'un tuyau flexible (10) selon l'une des revendications 1 à 7, dans lequel la face externe (18) du tuyau (10) possède un profilage (20) qui présente, vu en coupe le long d'un axe longitudinal (22) du tuyau (10), une forme ondulée avec des bossages (24) et des creux (26), **caractérisé par** un applicateur (68) pour le fil électro-conducteur (30), qui comprend une roue d'applicateur (70) rotative, semblable à une roue à étages ou cellulaire, sur la circonférence externe de laquelle le fil électro-conducteur (30) peut être appliqué et qui est conçue pour s'emboîter, par complémentarité de forme, avec le profilage (20) du tuyau (10) pouvant être inséré dans un support de tuyau (64), de sorte que, lorsque la roue d'applicateur (70) tourne, un mouvement d'avance relatif entre le tuyau (10) et l'applicateur (68) est réalisé, lors duquel la roue d'applicateur (70) applique le fil électro-conducteur (30) le long de l'axe longitudinal (22) du tuyau (10) en suivant les bossages (24) et les creux (26) sur le profilage (20) du tuyau (10).

13. Dispositif (54) selon la revendication 12, **caractérisé en ce que** l'applicateur (68) comprend un bras d'applicateur (82) sur lequel la roue d'applicateur (70) est logée de manière rotative et qui peut être pivoté par rapport au support de tuyau (64) autour d'un axe de pivotement (84) pouvant être fixé de manière déterminée.

14. Dispositif (54) selon la revendication 13, **caractérisé en ce que** le bras d'applicateur (82), avec la roue d'applicateur (70) et son axe de pivotement (84), est disposé par rapport au support de tuyau (64) de sorte que, autour de l'axe de pivotement (84), il en résulte un couple en direction du support de tuyau (64) et/ou **en ce que** le bras d'applicateur (82) est précontraint de manière élastique autour de son axe de pivotement (84) en direction du support de tuyau (64).

15. Dispositif (54) selon l'une des revendications 12 à 14, **caractérisé en ce que**
le dispositif (54) comprend un châssis (56) sur lequel le support de tuyau est monté, de manière fixe, dans lequel l'applicateur (68) comprend un chariot d'applicateur (72) qui supporte la roue d'applicateur (70) et qui est guidé de manière coulissante sur le châssis (56) le long du support de tuyau (64) et/ou
l'applicateur (68) comprend un dispositif d'alimentation (94) pour le fil électro-conducteur (30) et un dispositif d'alimentation (96) pour un ruban adhésif (40), dans lequel le fil électro-conducteur (30) et le ruban adhésif (40) peuvent être introduits par les dispositifs d'alimentation (94, 96) dans une paire de galets de guidage (100, 102) qui sont conçus pour assembler le fil (30) et le ruban adhésif (40) avant de le transmettre à la roue d'applicateur (70) et/ou
la roue d'applicateur (70) comprend, entre deux portions de moyeu (134, 136), une pluralité de tiges d'axe (138) réparties uniformément sur la circonférence, qui logent chacune de manière rotative un manchon cylindrique creux (140) servant de corps de compression pour le fil électro-conducteur (30) et/ou
la roue d'applicateur (70) est reliée en entraînement avec un dispositif d'entraînement rotatif (132).
